# EUROPEAN PATENT APPLICATION

(11) **EP 3 859 374 A1**
(43) Date of publication of application: **04.08.2021**
(21) Application number: 19866356.9
(22) Date of filing: 03.09.2019
(51) Int. Cl.: G01S 7/02, G01S 13/93, H01Q 1/27, H01Q 3/30

(54) **ELECTRONIC DEVICE, ELECTRONIC DEVICE CONTROL METHOD, AND ELECTRONIC DEVICE CONTROL PROGRAM**

(30) Priority: 26.09.2018 JP 2018180944
(71) Applicant: Kyocera Corporation, Kyoto-shi, Kyoto 612-8501 (JP)
(72) Inventor: MURAKAMI, Youhei, Kyoto-shi, Kyoto 612-8501 (JP); NISHIKIDO, Masamitsu, Kyoto-shi, Kyoto 612-8501 (JP); SAHARA, Tooru, Kyoto-shi, Kyoto 612-8501 (JP)
(74) Representative: Viering, Jentschura & Partner mbB Patent- und Rechtsanwälte
(86) International application number: PCT/JP2019/034659
(87) International publication number: WO 2020/066498

(57) **Abstract**

This electronic device comprises a plurality of transmitting antennas installed in a mobile body and a transmission controller configured to control transmitted waves to be transmitted from the plurality of transmitting antennas to form a beam in a predetermined direction. The transmission controller controls the predetermined direction in which the beam is formed according to a steering direction of the mobile body.

## Description

### CROSS REFERENCE TO RELATED APPLICATION

This application claims the priority of Patent Application 2018-180944 filed in Japan on September 26, 2018, and the entire disclosure of this previous application is hereby incorporated for reference.

### TECHNICAL FIELD

The present disclosure relates to an electronic device, a method for controlling electronic device, and an electronic device control program.

### BACKGROUND

For example, in the field of industries related to automobiles, a technique for measuring distance between an own vehicle and an object is important. In particular, in recent years, RADAR (Radio Detecting and Ranging) technique for measuring distance between the own vehicle and the object by transmitting radio waves such as millimeter waves and receiving reflected waves obtained by reflection by the object such as an obstacle has been studied in various ways. The importance of technique for measuring such distances and the like is expected to grow more and more in the future with development of techniques that assist drivers in driving and related to automated driving that automates a part or all of driving.

### CITATION LIST

### Patent Literature

PTL 1: WO2016167253A1

### SUMMARY

An electronic device according to an embodiment comprises a plurality of transmitting antennas installed in a mobile body and a transmission controller configured to control transmitted waves to be transmitted from the plurality of transmitting antennas to form a beam in a predetermined direction. The transmission controller controls the predetermined direction in which the beam is formed according to a steering direction of the mobile body.

A method for controlling an electronic device according to an embodiment includes the following steps (19 and (2).
(1) A step of controlling transmitted waves to be transmitted from a plurality of transmitting antennas installed in a mobile body to form a beam in a predetermined direction.
(2) A step of controlling the predetermined direction in which the beam is formed according to a steering direction of the mobile body.

An electronic device control program according to an embodiment causes a computer to perform the steps (1) and (2) described above.

### BRIEF DESCRIPTION OF THE DRAWINGS

In the accompanying drawings:
FIG. 1 is a diagram for explaining an example of transmitted waves of an electronic device according to an embodiment.
FIG. 2 is a diagram for explaining another example of transmitted waves of an electronic device according to an embodiment.
FIG. 3 is a diagram for explaining an example of arranging sensors on a mobile body.
FIG. 4 is a diagram for showing an example of how an electronic device according to an embodiment is connected to other functional parts.
FIG. 5 is a functional block diagram for schematically showing a configuration of an electronic device according to an embodiment.
FIG. 6 is a diagram for explaining an example of operation of an electronic device according to an embodiment.
FIG. 7 is a diagram for explaining an example of operation of an electronic device according to an embodiment.
FIG. 8 is a diagram for explaining an example of operation of an electronic device according to an embodiment.
FIG. 9 is a diagram for explaining an example of operation of an electronic device according to an embodiment.
FIG. 10 is a flowchart for explaining an example of operation of an electronic device according to an embodiment.
FIG. 11 is a diagram for explaining an example of operation of an electronic device according to a second embodiment.
FIG. 12 is a diagram for explaining an example of operation of an electronic device according to a second embodiment.
FIG. 13 is a diagram for explaining an example of operation of an electronic device according to a second embodiment.
FIG. 14 is a diagram for explaining an example of operation of an electronic device according to a second embodiment.

### DETAILED DESCRIPTION

Conventionally, in the technical field of wireless communications and the like, a technique for forming a beam of transmitted waves to be transmitted from a plurality of transmitting antennas (beamforming) is known. According to beamforming, it is possible to extend the reachable distance of radio waves, for example, by forming a beam of transmitted waves to be transmitted from a plurality of transmitting antennas in a predetermined direction. A technique for adopting such beamforming in a millimeter wave radar as described above has also been proposed (for example, see PTL 1). Among various measurement techniques, it is desirable to adopt a suitable one depending on an object to be measured and/or an application. An objective of the present disclosure is to provide an electronic device, a method for controlling an electronic device, and an electronic device control program, that enhance safety during maneuvering a mobile body. According to an embodiment, it is possible to provide an electronic device, a method for controlling an electronic device, and an electronic device control program, that enhance safety during maneuvering a mobile body. Hereinafter, an embodiment will be described in detail with reference to the drawings.

An electronic device according to an embodiment can be used when detecting a space for parking or stopping (stopping) a vehicle (mobile body) such as an automobile. For this purpose, the electronic device according to an embodiment measures distance between an object (body) existing around a sensor and a sensor by a sensor installed in a vehicle such as an automobile. The sensor may transmit transmitted waves such as electromagnetic waves as detected waves from a transmitting antenna. Further, the sensor may receive reflected waves reflected by an object among transmitted waves, from the receiving antenna. The sensor may comprise at least one of a transmitting antenna and a receiving antenna. The electronic device according to an embodiment may measure distance between the sensor and the object based on transmitted waves transmitted by the transmitting antenna and reflected waves received by the receiving antenna.

Hereinafter, as a typical example, a configuration in which an electronic device according to an embodiment is mounted on an automobile such as a passenger car will be described. However, mobile bodies on which an electronic device according to an embodiment is mounted are not limited to the automobile. An electronic device according to an embodiment may be mounted on a variety of mobile bodies, such as buses, trucks, motorcycles, bicycles, ships, aircrafts agricultural vehicles such as tractors, fire engines, ambulances, police vehicles, snowplows, cleaning vehicles for cleaning roads, drones or the like. Further, mobile bodies on which an electronic device according to an embodiment is mounted are not necessarily limited to mobile bodies moving by their own power. For example, a mobile body on which an electronic device according to an embodiment is mounted may be a trailer portion towed by a tractor. An electronic device according to an embodiment can measure distance between the sensor and the object in a situation where at least one of the sensor and the object can move. Further, an electronic device according to an embodiment can measure distance between the sensor and the object even if both the sensor and the object are stationary.

Firstly, an example of transmitted waves to be transmitted by an electronic device according to an embodiment will be described.

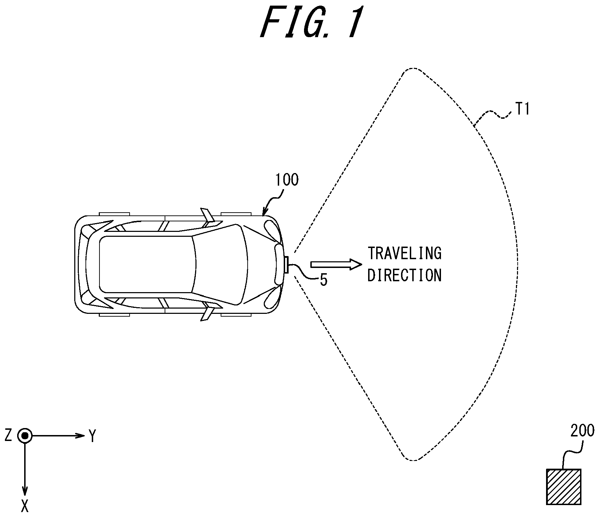

FIG. 1 is a diagram for explaining an example of transmitted waves to be transmitted by an electronic device according to an embodiment. FIG. 1 shows an example in which a sensor comprising a transmitting antenna according to an embodiment is installed in a mobile body.

The mobile body 100 shown in FIG. 1 is provided with a sensor 5 comprising a transmitting antenna according to an embodiment. Further, the mobile body 100 shown in FIG. 1 shall be equipped with an electronic device 1 according to an embodiment (for example, built-in). A specific configuration of the electronic device 1 will be described further below. The mobile body 100 shown in FIG. 1 may be an automobile vehicle such as a passenger car, but may be any type of mobile body. FIG. 1, the mobile body 100, for example, may be moving (traveling or slow traveling) in the Y-axis positive direction (traveling direction) shown in FIG. 1, or may be moving in other directions, or may be stationary without moving. In the present disclosure, for example, the Y-axis positive direction shown in FIG. 1 (traveling direction) may be a steering reference direction or a beam reference direction.

As shown in Fig. 1, a sensor 5 comprising a plurality of transmitting antennas is installed in a mobile body 100. In the example shown in Fig. 1, only one sensor comprising a plurality of transmitting antennas is installed in front of the mobile body 100. Here, a position where the sensor 5 comprising the plurality of transmitting antennas is installed in the mobile body 100 is not limited to the position shown in FIG. 1, but may be any other positions as appropriate. For example, the sensor 5 as shown in FIG. 1 may be installed in the left, right, and / or rear of the mobile body 100. Further, a number of such sensors 5 may be an arbitrary number of one or more, depending on various conditions (or requirements) such as a range of measurement and / or accuracy of measurement in the mobile body 100.

The sensor 5 transmits electromagnetic waves as transmitted waves to be transmitted from a transmitting antenna. For example, if there is a predetermined object (body) around the mobile body 100, at least a part of transmitted waves transmitted from the sensor 5 is reflected by the object and become reflected waves. Then, by receiving such reflected waves by the receiving antenna of the sensor 5 for example, the electronic device 1 mounted on the mobile body 100 can detect the object.

The sensor 5 comprising a transmitting antenna may typically be a radar (RADAR(Radio Detecting and Ranging) sensor configured to transmit and receive radio waves. However, the sensor 5 is not limited to the radar sensor. The sensor 5 according to an embodiment may be a sensor based on a technique of, for example, LIDAR (Light Detection and Ranging, Laser Imaging Detection and Ranging) by light waves. Such sensors can be configured to include, for example, a patch antenna. Because techniques such as RADAR and LIDAR have been already known, detailed descriptions may be simplified or omitted as appropriate.

The electronic device 1 mounted on the mobile body 100 shown in FIG. 1 can detect a predetermined object (body) existing within a predetermined distance, mainly in front of the mobile body 100, by transmitting transmitted waves from the transmitting antenna of the sensor 5. In this way, the electronic device 1 can detect presence of a predetermined object mainly in front of the mobile body 100. Further, the electronic device 1 can measure the distance between the mobile body 100, which is its own vehicle, and a predetermined object. Further, the electronic device 1 can also measure an azimuth angle with respect to the predetermined object from the mobile body 100 which is its own vehicle. Further, the electronic device 1 can also measure relative speed between the mobile body 100, which is its own vehicle, and the predetermined object.

Here, the predetermined object (body) may be at least one of, for example, an oncoming vehicle traveling in a lane adjacent to the mobile body 100, a vehicle traveling in parallel with the mobile body 100, and a vehicle in front of or behind the mobile body 100 traveling in the same lane as the mobile body 100. Further, the predetermined object may be an arbitrary body existing around the mobile body 100, such as motorcycles, bicycles, strollers, pedestrians, guardrails, medians, road signs, sidewalk steps, walls, obstacles, manholes and the like. Furthermore, the predetermined object may be moving or stopping. For example, the predetermined object may be an automobile parking or stopping around the mobile body 100. In the present disclosure, objects detected by the sensor 5 include inanimate objects as well as organisms such as humans or animals.

As shown in FIG. 1, the electronic device 1 mounted on the mobile body 100 transmits transmitted waves that can be, for example, radio waves, from the sensor 5 comprising a transmitting antenna. In FIG. 1, the range (beam) within which the transmitted waves to be transmitted from the transmitting antenna of the sensor 5 reaches is schematically shown as a transmitted wave T1. As described below, the sensor 5 may be configured to include a plurality of transmitting antennas. The sensor 5 can form a beam of the transmitted wave T1 as shown in FIG. 1 by transmitted waves to be transmitted from one of a plurality of transmitting antennas, for example. As shown in FIG. 1, the beam width (transmission range) of the transmitted wave T1 to be transmitted from the sensor 5 can be an angle of about 120 °, for example. The beam width of the transmitted wave T1 to be transmitted from the transmitting antenna of the sensor 5 can be set in various ways based on various conditions, such as the configuration and / or arrangement of the transmitting antenna, for example.

Thus, the electronic device 1 according to an embodiment may transmit the transmitted wave T1 from at least one of the plurality of transmitting antennas comprised by the sensor 5. In this case, the transmitted wave T1 has a relatively wide beam width, for example, with an angle of about 120°, as shown in FIG. 1. Hereinafter, an operation mode in which a transmitted wave such as the transmitted wave T1 is transmitted from at least one of the plurality of transmitting antennas comprised by the sensor 5 installed in the mobile body 100 may be referred to as "normal mode" for convenience. In the normal mode, the electronic device 1 can transmit transmitted waves from at least one of the plurality of transmitting antennas comprised by the sensor 5 and perform a measurement by normal radar (for example, without beamforming).

In the situation shown in FIG. 1, a beam of the transmitted wave T1 does not reach the object 200 in front of the mobile body 100. Therefore, in this situation, the electronic device 1 mounted on the mobile body 100 cannot detect the presence of the object 200 based on the transmitted wave T1 to be transmitted from the transmitting antenna of the sensor 5. For example, it is assumed that the beam of the transmitted wave T1 reaches the object 200 as the mobile body 100 moves forward further from the situation shown in FIG. 1. In this case, the electronic device 1 mounted on the mobile body 100 can detect the presence of the object 200 based on the transmitted wave T1 to be transmitted from the transmitting antenna of the sensor 5.

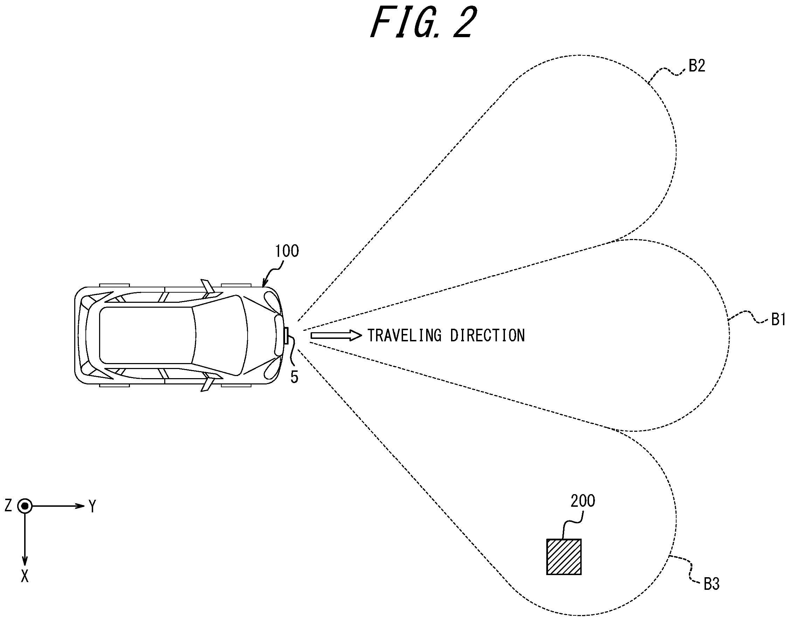

FIG. 2 is a diagram for explaining another example of transmitted waves to be transmitted by the electronic device 1 according to an embodiment.

FIG. 2 schematically shows a state in which transmitted waves to be transmitted from a plurality of transmitting antennas comprised by the sensor 5 installed in the mobile body 100 form a beam of radio waves. As described below, the sensor 5 may be configured to include a plurality of transmitting antennas. Therefore, the electronic device 1 according to an embodiment can form a beam (beamforming) of the transmitted wave T to be transmitted from at least two of the plurality of transmitting antennas comprised by the sensor 5 installed in the mobile body 100. Specifically, the electronic device 1 can intensify the transmitted waves in a predetermined direction by controlling the phase of the transmitted waves to be transmitted from at least two of the plurality of transmitting antennas comprised by the sensor 5.

For example, as shown in FIG. 2, a plurality of transmitting antennas comprised by the sensor 5 installed in front of the mobile body 100 can form, for example, a beam B1 (beamforming) of transmitted waves in the forward direction of the mobile body 100. At this time, the electronic device 1 controls the phase of each transmitted wave so that the phase of each transmitted wave to be transmitted from the plurality of transmitting antennas comprised by the sensor 5 is aligned in the forward direction (Y-axis positive direction) of the mobile body 100. In this way, the plurality of transmitted waves intensify each other in the forward direction (Y-axis positive direction) of the mobile body 100 and form the radio wave beam B1. As described above, by adopting beamforming technique, the accuracy of measuring distance to a predetermined object detected by the transmitted waves can be enhanced. In particular, according to beamforming, the noise component included in the reflected waves can be reduced because the beam width of the transmitted waves becomes narrowed. Further, according to beamforming, reachable distance of the transmitted waves can be extended because the transmitted waves in specific directions intensify each other.

Further, the electronic device 1 can change the direction of the beam of the transmitted waves by appropriately controlling the phase of the transmitted waves to be transmitted from the plurality of transmitting antennas comprised by the sensor 5. For example, the electronic device 1 can also control the phase of each transmitted wave so that the phase of each transmitted wave to be transmitted from the plurality of transmitting antennas comprised by the sensor 5 is aligned in the left forward direction (left side in the positive direction of the Y axis) of the mobile body 100.In this way, the plurality of transmitted waves intensify each other in the left forward direction (left side in the positive direction of the Y axis) of the mobile body 100 and form the radio wave beam B2. Further, the electronic device 1 can also control the phase of each transmitted wave so that the phase of each transmitted wave to be transmitted from the plurality of transmitting antennas comprised by the sensor 5 is aligned in the right forward direction (right side in the positive direction of the Y axis) of the mobile body 100. In this way, the plurality of transmitted waves intensify each other in the right forward direction (right side in the positive direction of the Y axis) of the mobile body 100 and form the radio wave beam B3. By appropriately changing the phase of the transmitted waves, the electronic device 1 can direct the beam of the transmitted waves to be transmitted from the transmitting antenna 40 in various directions other than the beams B1, B2, and B3 shown in FIG. 2.

As shown in FIG. 2, for example, when the object 200 exists around the mobile body 100 (in right forward direction), the electronic device 1 can control the transmitted wave to be transmitted from the sensor 5 to form the beam B3. In this way, the electronic device 1 can measure an angle (for example, azimuth angle) from the sensor 5 to the object 200 by controlling the direction of the beam of the transmitted waves. Thus, according to beamforming, the accuracy of measuring an angle to a predetermined object can be enhanced by controlling the emitting direction of the transmitted waves.

Thus, the electronic device 1 according to an embodiment may form a beam (beamforming) such as the beam B1, B2, or B3 shown in FIG. 2, for example, by transmitting transmitted waves from at least two of the plurality of transmitting antennas comprised by the sensor 5.In this case, the beam B1, B2, or B3 may have a beam width that is narrower than the beam width of the transmitted wave T1 shown in FIG. 1, for example, with an angle of about 30°, as shown in FIG. 2. Further, as shown in FIG. 2, the transmitted waves forming the beams B1, B2, or B3 may have a longer reachable range than the transmitted wave Ta shown in FIG 1, for example.

Hereinafter, the operation mode for performing beamforming (beamforming) of the transmitted waves to be transmitted from at least two of the plurality of transmitting antennas comprised by the sensor 5 installed in the mobile body 100 may be referred to as "BF mode" for convenience. On the other hand, the normal mode described above may be an operation mode in which beamforming of transmitted waves to be transmitted from the plurality of transmitting antennas comprised by the sensor 5 installed in the mobile body 100 is not performed.

In FIGS. 1 and 2, the size of the sensor 5 is shown in exaggerated form. Therefore, in FIGS. 1 and 2, the ratio between the size of the sensor 5 and the size of the mobile body 100 does not necessarily indicate the actual ratio. Further, in FIGS. 1 and 2, the sensor 5 is shown in a state of being installed outside the mobile body 100. However, in an embodiment, the sensor 5 may be installed at various positions on the mobile body 100. For example, in an embodiment, the sensor 5 may be installed inside the bumper of the mobile body 100 not to appear in the external appearance of the mobile body 100. Further, in FIGS. 1 and 2, the transmitted wave T1 to be transmitted from the sensor 5 and the beams B1, B2, and B3 formed by the transmitted waves are schematically shown. Therefore, in FIGS. 1 and 2, the ratio between the sizes of the transmitted wave T1 and the beams B1, B2, and B3 and the size of the mobile body 100 does not necessarily indicate the actual ratio.

Hereinafter, as a typical example, the transmitting antenna of the sensor 5 will be described as transmitting radio waves in a frequency band such as millimeter waves (30 GHz or more) or quasi-millimeter waves (for example, around 20 GHz to 30 GHz). For example, the transmitting antenna of the sensor 5 may transmit radio waves with a frequency bandwidth of 4 GHz, such as 77 GHz to 81 GHz. By transmitting and receiving millimeter waves, the electronic device 1 can calculate distance between the mobile body 100 in which the sensor 5 is installed and a predetermined object existing around the mobile body 100. Further, by transmitting and receiving millimeter waves, the electronic device 1 can also calculate positions of a predetermined object existing around the mobile body 100 in which the sensor 5 is installed. Further, by transmitting and receiving millimeter waves, the electronic device 1 can also calculate an angle toward a predetermined object existing around the mobile body 100 in which the sensor 5 is installed. Further, by transmitting and receiving millimeter waves, the electronic device 1 can also calculate relative speed between the mobile body 100 in which the sensor 5 is installed and a predetermined object existing around the mobile body 100. In addition, in this disclosure, the description of AGHz to BGHz with A and B as arbitrary numbers means AGHz or higher and below BGHz. In addition, in this disclosure, the description of AGHz to BGHz with A and B as arbitrary numbers may also mean above AGHz and BGHz or lower.

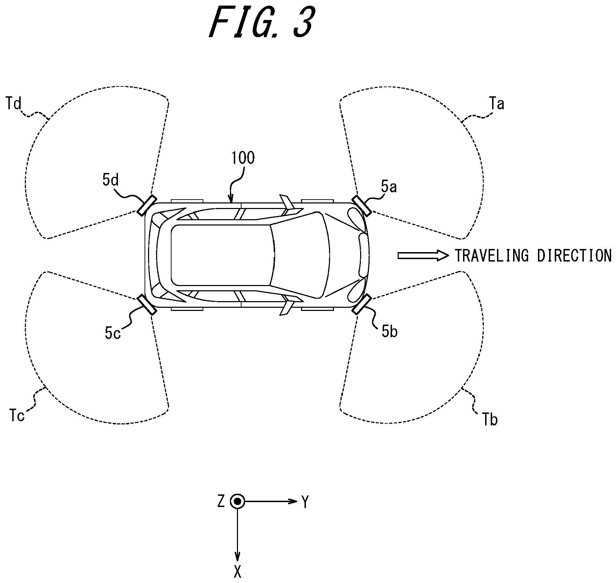

FIG. 3 is a diagram for explaining an example of arranging sensors on a mobile body. When the electronic device 1 comprises a plurality of sensors 5, the sensors 5 may be installed at a plurality of positions of the mobile body 100 as shown in FIG. 3.

In the example shown in FIG. 3, the sensor 5a is arranged in the left front portion of the mobile body 100, the sensor 5b is arranged in the right front portion of the mobile body 100, the sensor 5c is arranged in the right rear portion of the mobile body 100 and the sensor 5d is arranged on the left rear portion of the mobile body 100. Further, in the example shown in FIG. 3, the transmitted wave Ta is transmitted from the sensor 5a, the transmitted wave Tb is transmitted from the sensor 5b, the transmitted wave Tc is transmitted from the sensor 5c, and the transmitted wave Td is transmitted from the sensor 5d. Hereinafter, in the electronic device 1 according to an embodiment, when a plurality of sensors such as the sensor 5a, the sensor 5b, the sensor 5c, and the sensor 5d are not distinguished, they are simply collectively referred to as "sensor 5".

The electronic device 1 according to an embodiment can individually control a plurality of sensors 5. For example, the electronic device 1 may independently control the on / off of the plurality of sensors 5, respectively. Further, for example, the electronic device 1 may independently control at least one of the beam width of the transmitted waves to be transmitted from the plurality of sensors 5 and the reachable distance of the transmitted waves, respectively. Further, for example, the electronic device 1 may independently control operation modes (for example, normal mode / BF mode) of the plurality of sensors 5, respectively. Further, for example, the electronic device 1 may independently control beamforming direction of the transmitted waves to be transmitted from the plurality of sensors 5, respectively. The electronic device 1 according to an embodiment appropriately controls the beam width of the transmitted waves to be transmitted from the plurality of sensors 5 and the reachable distance of the transmitted waves, and thereby, presence or absence of an object can be detected in the substantially entire circumference of the mobile body 100 shown in FIG 3.

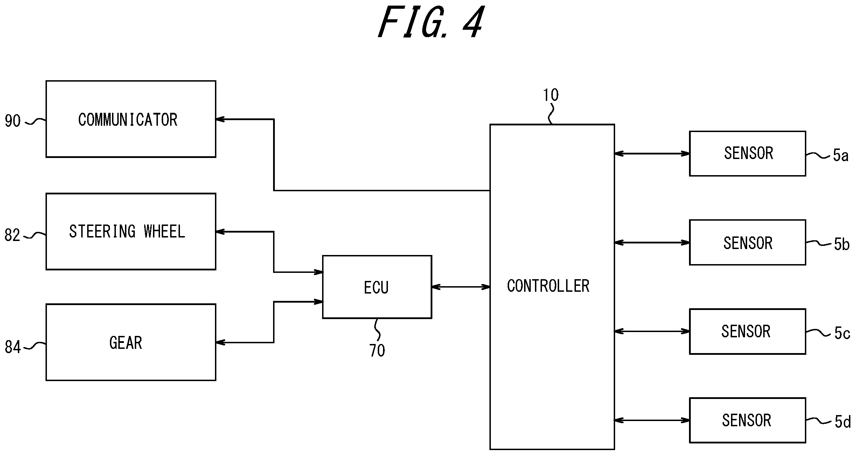

FIG. 4 is a diagram for showing an example of how an electronic device according to an embodiment is connected to other functional parts.

FIG. 4 is a diagram for schematically showing a mode of connection between the mobile body 100 and the sensor 5 as shown in FIG. 3, for example. As shown in FIG. 4, in an embodiment, the plurality of sensors 5 are connected to the controller 10, respectively. Further, the controller 10 may also be connected to a mobile body controller (ECU) 70 configured to control the mobile body 100. The mobile body controller 70 may be connected to, for example, a steering wheel 82 and / a gear 84 used for operating the mobile body 100. The mobile body controller 70 may be connected to another functional part used for operating the mobile body 100, such as a brake. The mobile body controller 70 may be connected to an arbitrary functional part used for operating the mobile body 100, or may be connected to an arbitrary functional part to be controlled by the mobile body 100. In addition, the controller 10 may be connected to a communicator 90. In an embodiment, each of these functional parts can communicate various information through their respective connections.

Each of the plurality of sensors 5 shown in FIG. 4 may be the plurality of sensors 5 shown in FIG. 3. Each of these plurality of sensors 5 is connected to the controller 10 respectively, and is thereby controlled independently by the controller 10 respectively as described above.

The controller 10 can perform various detections such as detection of an object around the mobile body 100 based on the information output from the plurality of sensors 5. Further, the controller 10 can control each of the plurality of sensors 5 when performing various detections as described above. The functions and operations of the controller 10 will be further described below.

The mobile body controller (ECU (Electronic Control Unit)) 70 can acquire states of various functional parts in the mobile body 100, such as the steering wheel 82 and the gear 84, when the mobile body 100 is an automobile, for example.

The steering wheel 82 controls a turning angle of wheels such as tires that cause the mobile body 100 to travel. The mobile body 100 can change its direction during traveling by controlling the steering wheel 82. The steering wheel 82 of the mobile body 100 may be the same as the steering used for steering a general automobile, for example. In an embodiment, the steering wheel 82 in the mobile body 100 may be operated by the driver or by the mobile body controller 70 in case of automated driving. In the present disclosure, steering refers to as an operation for changing the direction of a mobile body. The steering in the present disclosure may include operations to change the direction of various mobile bodies, such as buses, trucks, motorcycles, bicycles, ships, aircrafts, agricultural vehicles such as tractors, fire trucks, ambulances, police vehicles, snow plows, street sweepers, drones or the like.

The gear 84 may be a transmission (transmission), such as a gearbox, that can change the reduction ratio of the power of the mobile body 100. The mobile body 100 can switch the forward travel or the backward travel during traveling by operation of the gear 84. Further, the mobile body 100 can change the speed during traveling by operation of the gear 84. The gears 84 in the mobile body 100 may be similar to the transmission (transmission) used for gear shifting of general automobile, for example. In an embodiment, the gears 84 in the mobile body 100 may be operated by the driver or by the mobile body controller 70 in case of automated driving.

Not only the steering wheel 82 and the gear 84 but also functional parts such as a throttle and / or a brake may be connected to the mobile body controller 70. The throttle and / or a brake in the mobile body 100 may be similar to those used for shifting gears of general automobiles, for example. In an embodiment, the throttle and / or a brake in the mobile body 100 may be operated by the driver or by the mobile body controller 70 in case of automated driving.

The communicator 90 notifies the driver of the mobile body 100 and the like of predetermined information. The communicator 90 may be any functional part configured to stimulate at least one of the auditory, visual, and tactile senses of the driver of the mobile body 100, for example, by sound, voice, light, text, image, and vibration. Specifically, the communicator 90 may be, for example, a buzzer, a speaker, a light emitter such as an LED, a display such as an LCD, or a tactile presentation part such as a vibrator. In an embodiment, the communicator 90 notifies, for example, the driver of the mobile body 100 of information obtained as a result of detecting an object around the mobile body 100. For example, in an embodiment, when an object around the mobile body 100 is detected, the communicator 90 configured to notify the visual information may notify the driver of the mobile body that the object has been detected by emitting light or displaying information. In an embodiment, when an object around the mobile body 100 is detected, the communicator 90 configured to notify the auditory information may notify the driver of the mobile body that the object has been detected by sound or voice.

When the mobile body 100 is being driven by the driver, the mobile body controller 70 can detect states of various functional parts of the mobile body 100. For example, the mobile body controller 70 can detect how much angle of turn (steering angle) the steering wheel 82 of the mobile body 100 is operated. Here, the steering angle may be a change angle from the Y-axis direction in the case shown in FIG. 2. For example, the mobile body controller 70 can detect whether the gear 84 of the mobile body 100 is operated in forward travel or backward travel, and what speed the transmission is operated. For example, the mobile body controller 70 may detect the throttle and brake on / off of the mobile body 100, as well as the degree of throttle and brake.

Further, when the mobile body 100 is being driven by the driver, as described above, the communicator 90 may notify the information as a result of detecting an object around the mobile body 100. In this case, the controller 10 may control the communicator 90 to notify the information as a result of detecting an object around the mobile body 100.

On the other hand, when the mobile body 100 is operated by automated driving, the mobile body controller 70 can control various functional parts of the mobile body 100. Here, the automated driving may be, for example, automated driving of level 1 to 5 defined by the Japanese government and National Highway Traffic Safety Administration (NHTSA) of the U.S. Department of Transportation. For example, the mobile body controller 70 may automatically control the steering wheel 82 of the mobile body 100 according to the detection results by the sensor 5. The mobile body controller 70 may automatically control the gears 84 of the mobile body 100 (forward travel / backward travel and the like) according to the detection results by the sensor 5. The mobile body controller 70 may automatically control what speed the gear 84 is operated in according to the detection result by the sensor 5. Further, for example, the mobile body controller 70 may automatically control the on / off of the throttle and brake of the mobile body 100, as well as the degree of throttle and brake, according to the detection results by the sensor 5.

In this way, the electronic device 1 may comprise the mobile body controller 70 configured to control the operation of the mobile body 100. In this case, the controller 10 may supply the information obtained as a result of detecting an object around the mobile body 100 to the mobile body controller 70. Then, the mobile body controller 70 may control the operation of the mobile body 100 based on the information supplied from the controller 10.

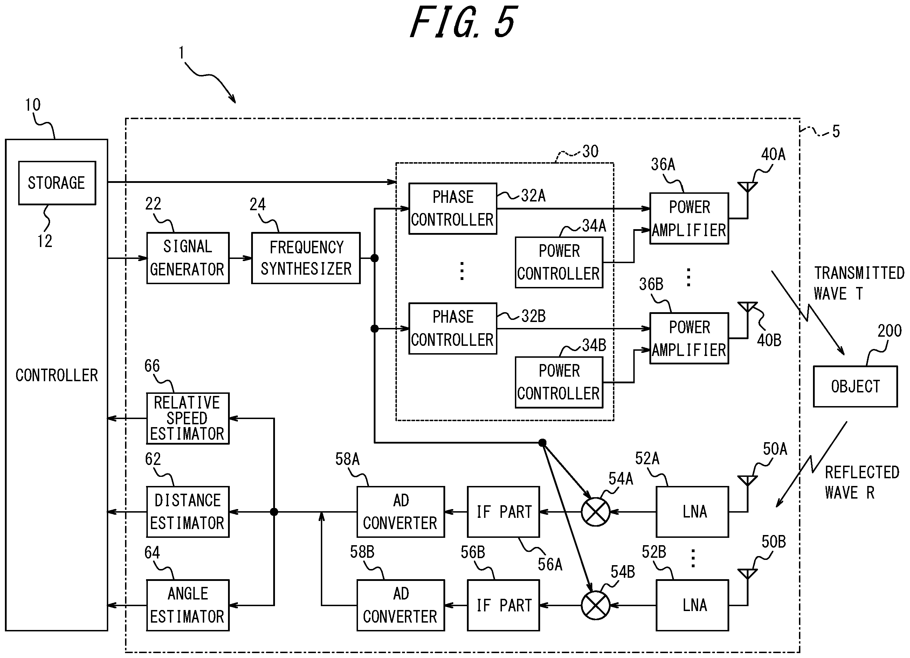

FIG. 5 is a functional block diagram for schematically showing a configuration of an electronic device according to an embodiment. Hereinafter, the configuration of the electronic device 1 according to an embodiment will be described.

As shown in FIG. 5, the electronic device 1 according to an embodiment comprises a sensor 5 and a controller 10. FIG. 5 shows in more detail only one sensor 5 as a representative example of the plurality of sensors 5 connected to the controller 10 shown in FIG. 4.

The electronic device 1 according to an embodiment may comprise a signal generator 22, a frequency synthesizer 24, a transmission controller 30, power amplifiers 36A and 36B, and transmitting antennas 40A and 40B. The sensor 5 described above may comprise at least transmitting antennas 40A and 40B. The sensor 5 may also comprise other functional parts, such as at least one of the following: controller 10; transmission controller 30; and power amplifiers 36A and 36B. In addition, in the examples shown in FIGS. 1 to 3, the sensor 5 and the controller 10 are shown as different functional parts, but the sensor 5 may include all or a part of the controller 10. Further, the member included in the sensor 5 is not limited to the example shown in FIG. 5, and any member among the members shown in FIG. 5 may be removed from the sensor 5. Here, the transmitting antenna 40A and the transmitting antenna 40B, the receiving antenna 50A and the receiving antenna 50B, and the power amplifier 36A and the power amplifier 36B may be housed in a single enclosure as the sensor 5. In the present disclosure, two transmitting antennas and four receiving antennas will be described. In the present disclosure, the number of transmitting antennas and receiving antennas can be any appropriate number.

The electronic device 1 shown in FIG. 5 comprises two transmitting antennas 40A and 40B. Hereinafter, in the electronic device 1 according to an embodiment, when the transmitting antenna 40A and the transmitting antenna 40B are not distinguished, they are simply collectively referred to as the "transmitting antenna 40". Further, the electronic device 1 shown in FIG. 5 may also comprise two other functional parts (for example, power amplifiers 36A and 36B). As for such other functional parts, when a plurality of functional parts of the same type are not specifically distinguished, such functional parts may be collectively referred to by omitting symbols such as A and B.

Furthermore, the electronic device 1 according to an embodiment may comprise receiving antennas 50A and 50B, LNA 52A and 52B, mixers 54A and 54B, IF parts 56A and 56B, AD convertors 58A and 58B, a distance estimator 62, an angle estimator 64, and a relative speed estimator 66. Hereinafter, when a plurality of functional parts of the same type are not specifically distinguished, such functional parts may be collectively referred to by omitting symbols such as A and B. The sensor 5 described above may comprise receiving antennas 50A and 50B. The sensor 5 may also comprise other functional parts such as LNA 52A and 52B.

The controller 10 comprised by the electronic device 1 according to an embodiment can control the operation of the entire electronic device 1 including the control of each functional part constituting the electronic device 1. The controller 10 may include at least one processor, such as a CPU (central processing unit), for example, in order to provide control and processing power for performing various functions. The controller 10 may be realized collectively by one processor, by several processors, or by individual processors, respectively. The processor may be realized as a single integrated circuit. An integrated circuit is also referred to as an IC (Integrated Circuit). A processor may be realized as a plurality of communicably connected integrated circuits and discrete circuits. A processor may be realized based on various other known techniques. In an embodiment, the controller 10 may be configured, for example, as a CPU and a program executed on the CPU. As shown in FIG. 5, the controller 10 may appropriately include a storage 12 such as a memory necessary for an operation of the controller 10. The storage 12 may store programs executed by the controller 10, results of process executed by the controller 10 and the like. Further, the storage 12 may function as a work memory for the controller 10.

In the electronic device 1 according to an embodiment, the controller 10 can control the transmission controller 30. In this case, the controller 10 may control the transmission controller 30 based on various information stored in the storage 12. Further, in the electronic device 1 according to an embodiment, the controller 10 may instruct the signal generator 22 to generate signals, or may control the signal generator 22 to generate signals.

When the mobile body 100 is an automobile, communication between ECUs (Electronic Control Units) can be performed using a communication interface such as CAN (Controller Area Network). In this case, the controller 10 can acquire the control information of the mobile body 100 from the ECU (for example, the mobile body controller 70) or the like. Therefore, in the electronic device 1 according to an embodiment, the controller 10 may determine the transmission mode of the transmitted waves based on the acquired control information and the like. Here, the transmission mode of the transmitted waves may be, for example, the normal mode and the BF mode described above. Further, the transmission mode of the transmitted waves may be various settings in each of the modes described above. For example, the transmission mode of the transmitted waves may define the number of transmitting antennas (the number of antennas) configured to transmit the transmitted waves in each of the above modes. Further, for example, the transmission mode of the transmitted waves may define, for example, presence or absence of beamforming and / or beamforming angle. Here, the beamforming angle may be an angle for increasing the gain of the beam with respect to the location (position) where the transmitting antenna 40 is installed in the mobile body 100 when performing beamforming.

When the transmission mode described above is determined, the controller 10 supplies the setting information in the transmission mode to the transmission controller 30.Here, the setting information in the transmission mode may include, for example, information on the number of transmitting antennas configured to transmit the transmitted waves in the transmission mode. Further, the setting information in the transmission mode may include, for example, information on the power at which the transmitting antenna transmits the transmitted waves in the transmission mode. Further, the setting information in the transmission mode may include information on the phase of each transmitted wave to be transmitted from the plurality of transmitting antennas 40 when beamforming is performed.

For such an operation, for example, a table or the like in which various transmission modes and setting information necessary for the operation in the transmission mode are associated with each other may be stored in the storage 12 in advance. Further, for example, the phase information of the transmitted waves when beamforming is performed in a certain transmission mode is stored in the storage 12 in association with the location (position) where the transmitting antenna 40 is installed and the installation angle in the mobile body 100. In such a case, when the transmission mode is determined, the controller 10 can read the setting information corresponding to the determined transmission mode from the storage 12 and supply the setting information to the transmission controller 30.

If it is desired to change the distance that the transmitted wave T to be transmitted from the transmitting antenna 40 can reach, for example, transmission power of the transmitted wave T may be adjusted to change the gain of the transmitting antenna 40 and / or the gain of the beamformer. In this case, the transmission power of the transmitted wave T to be transmitted by the transmitting antenna 40 that is associated with the gain of the transmitting antenna 40 and / or the gain of the beamforming may be stored in the storage 12.

Further, the various transmission modes as described above and the setting information corresponding to the transmission mode may be appropriately generated based on various conditions. In such a case, when the transmission mode is determined, the controller 10 may supply the setting information to the transmission controller 30 even though the setting information corresponding to the determined transmission mode is not stored in the storage 12.

The signal generator 22 generates signals (transmitted signals) to be transmitted as transmitted waves T from the transmitting antenna 40 under the control of the controller 10. When generating transmitted signals, the signal generator 22 assigns frequencies of the transmitted signals, for example, based on control by the controller 10. For example, the signal generator 22 generates a signal of a predetermined frequency in a frequency band, such as 77 to 81 GHz, by receiving frequency information from the controller 10. The signal generator 22 may be configured to include a functional part such as a voltage controlled oscillator (VCO).

The signal generator 22 may be configured as hardware with the relevant functions, for example, as a microcontroller, or as a processor such as a CPU and programs executed by the processor, for example. Each of the functional parts described below may also be configured as hardware with the relevant functions, or, if possible, may be configured as a microcontroller, for example, or as a processor such as a CPU and programs executed by the processor, for example.

In the electronic device 1 according to an embodiment, the signal generator 22 may generate transmitted signals such as chirp signals. In particular, the signal generator 22 may generate a signal whose frequency varies periodically and linearly (linear chirp signal). For example, the signal generator 22 may generate a chirp signal whose frequency periodically and linearly increases from 77 GHz to 81 GHz with passage of time. Further, for example, the signal generator 22 may generate a signal whose frequency periodically repeats linear increase (up chirp) and decrease (down chirp) from 77 GHz to 81 GHz with the passage of time. The signal generated by the signal generator 22 may be preset in the controller 10, for example. Further, the signal generated by the signal generator 22 may be stored in advance in the storage 12, for example. Because chirp signals used in technical fields such as radar are known, more detailed description will be simplified or omitted as appropriate. The signal generated by the signal generator 22 is supplied to the frequency synthesizer 24.

The frequency synthesizer 24 raises the frequency of the signal generated by the signal generator 22 to a frequency in a predetermined frequency band. The frequency synthesizer 24 may raise the frequency of the signal generated by the signal generator 22 to a frequency selected as the frequency of the transmitted wave T to be transmitted from the transmitting antenna 40. The frequency selected as the frequency of the transmitted wave T to be transmitted from the transmitting antenna 40 may be set by, for example, the controller 10. Further, the frequency selected as the frequency of the transmitted wave T to be transmitted from the transmitting antenna 40 may be stored in, for example, the storage 12. The signal whose frequency has been raised by the frequency synthesizer 24 is supplied to the transmission controller 30 and the mixer 54.

The transmission controller 30 controls the transmitted signal supplied by the frequency synthesizer 24 to be transmitted as a transmitted wave T from at least one of the plurality of transmitting antennas 40. As shown in FIG. 5, the transmission controller 30 may be configured to include a phase controller 32 and a power controller 34. Further, as shown in FIG. 5, the transmission controller 30 may control the transmitted waves to be transmitted as a transmitted wave T from the transmitting antenna 40 based on the control by the controller 10. Various information necessary for the controller 10 to control the transmission controller 30 may be stored in the storage 12.

The phase controller 32 controls the phase of the transmitted signal supplied from the frequency synthesizer 24. Specifically, the phase controller 32 may adjust the phase of the transmitted signal by appropriately advancing or delaying the phase of the signal supplied from the frequency synthesizer 24 based on the control by the controller 10. In this case, the phase controller 32 may adjust the phase of each transmitted signal based on the path difference of each transmitted wave T to be transmitted from the plurality of transmitting antennas 40. By the phase controller 32 appropriately adjusting the phase of each transmitted signal, the transmitted waves T to be transmitted from the plurality of transmitting antennas 40 intensify each other in a predetermined direction and form a beam (beamforming).

For example, when the transmitted wave T is transmitted without performing beamforming in the normal mode, the phase controller 32 does not have to control the phase of the transmitted signal to be transmitted as the transmitted wave T from the transmitting antenna 40. Further, when beamforming of the transmitted wave T is performed in the BF mode, for example, the phase controller 32 may control the phase of the plurality of transmitted signals to be transmitted as the transmitted waves T from the plurality of transmitting antennas 40, respectively, according to the direction of the beamforming. In this case, the correlation between the beamforming direction, and the phase amount to be controlled of the transmitted signals to be respectively transmitted by the plurality of transmitting antennas 40 may be stored in the storage 12, for example. The signal whose phase is controlled by the phase controller 32 is supplied to the power amplifier 36.

As shown in FIG. 5, the power controller 34 is connected to the corresponding power amplifier 36, respectively. The power controller 34 controls amplification of power by the power amplifier 36 connected to the power controller 34. By controlling the power amplifier 36, the power controller 34 controls the transmission power of the transmitted wave T to be transmitted from the transmitting antenna 40 connected to the power amplifier 36. For example, the power controller 34 can switch on and off of the transmission power of the power amplifier 36 connected to the power controller 34. That is, the power controller 34 can switch whether the transmitted wave T is transmitted from the transmitting antenna 40 connected to the power amplifier 36.

For example, the power controller 34A can switch on and off of the transmission power of the transmitted wave T to be transmitted from the transmitting antenna 40A. Also, the power controller 34B can switch on and off of the transmission power of the transmitted wave T to be transmitted from the transmitting antenna 40B. Therefore, the electronic device 1 can optionally control whether the transmitted wave T is transmitted from the transmitting antenna 40A and / or the transmitting antenna 40B, respectively, based on the control by both the power controller 34A and the power controller 34B. Further, the power controller 34 may appropriately adjust the transmission power of the power amplifier 36 connected to the power controller 34. In this way, the power controller 34 can specify how many transmitting antennas 40 of the plurality of transmitting antennas 40 the transmitted wave T is transmitted from, based on the settings in the transmission mode, for example. Various information necessary for control by the power controller 34 may be stored in, for example, the storage 12. For example, the storage 12 may store the correlation between the control by the power controller 34, and the transmission power of the transmitted wave T to be transmitted from the corresponding transmitting antenna 40. Further, the storage 12 may store the correlation described above for various transmission modes.

The electronic device 1 according to an embodiment can set various transmission modes of the transmitted wave T to be transmitted from at least one of the plurality of transmitting antennas 40 based on the control by the phase controller 32 and / or the power controller 34 in the transmission controller 30. Specifically, the electronic device 1 according to an embodiment can set various settings such as whether beamforming is performed and / or the direction of the beam when beamforming is performed. In this case, for example, the storage 12 may store the control information of the phase controller 32 and / or the power controller 34 corresponding to various transmission modes of the transmitted wave T. The controller 10 can control the transmitted wave T by the phase controller 32 and / or the power controller 34 by reading the control information corresponding to various transmission modes of the transmitted wave T from the storage 12. For example, when the electronic device 1 operates in the normal mode described above (for example, without beamforming), the power controller 34 controls the power for transmitting the transmitted wave T according to the antenna emission gain of each transmitting antenna 40. Further, for example, when the electronic device 1 operates in the BF mode described above (with beamforming), the phase controller 32 changes the phase of the transmitted signal to be transmitted from the transmitting antenna being used among the plurality of transmitting antennas 40 as appropriate. In an embodiment, when performing beamforming of transmitted waves T to be transmitted from a plurality of transmitting antennas 40, the number of beams and / or the shape of the beams can be various based on the control by the phase controller 32 and the power controller 34.

The power amplifier 36 amplifies the power of the transmitted signal supplied from the phase controller 32 based on the control by the power controller 34. Because the technique itself for amplifying the power of the transmitted signal has been already known, a more detailed description will be omitted. The power amplifier 36 is connected to the transmitting antenna 40.

The transmitting antenna 40 outputs (transmits) the transmitted signal amplified by the power amplifier 36 as a transmitted wave T. As described above, the sensor 5 may be configured to include a plurality of transmitting antennas, such as the transmitting antenna 40A and the transmitting antenna 40B. Because the transmitting antenna 40 can be configured in the same manner as the transmitting antenna being used in known radar technique, a more detailed description thereof will be omitted.

In this way, the electronic device 1 according to an embodiment can transmit a transmitted signal such as a chirp signal as a transmitted wave T from the plurality of transmitting antennas 40. Here, at least one of each functional part constituting the electronic device 1 may be housed in an enclosure with a structure that cannot be easily opened in a single enclosure. For example, the transmitting antenna 40A and the transmitting antenna 40B, the receiving antenna 50A and the receiving antenna 50B, and the power amplifier 36A and the power amplifier 36B may be housed in a single enclosure, and this enclosure may be constructed so that it cannot be easily opened. Furthermore, if the sensor 5 is installed in a mobile body 100, such as an automobile, the transmitting antenna 40 may transmit the transmitted wave T to outside of the mobile body 100, for example, through a member such as a radar cover. In this case, the radar cover may be made of a substance that allows electromagnetic waves to pass through, such as synthetic resin or rubber. This radar cover may be, for example, a housing of the sensor 5. By covering the transmitting antenna 40 with a member such as the radar cover, risks that the transmitting antenna 40 is damaged or malfunctions due to contact with external objects can be reduced. Further, the radar cover and the housing described above may also be referred to as a radome (same as below). Further, the position where the sensor 5 is installed in the mobile body 100 may be either outside or inside the mobile body 100. An inside the mobile body 100 may be, for example, an inside a body of the mobile body 100, an inside of bumpers, an inside of headlights, an inside of space of the vehicle or any combination of these.

The electronic device 1 shown in FIG. 5 comprises two transmitting antennas 40 such as the transmitting antenna 40A and the transmitting antenna 40B, and transmits the transmitted wave T by these two transmitting antennas 40. Therefore, the electronic device 1 shown in FIG. 5 is configured to respectively include two functional parts necessary for transmitting the transmitted waves T from the two transmitting antennas 40. Specifically, the transmission controller 30 is configured to include two phase controllers 32, such as the phase controller 32A and the phase controller 32B. Further, the transmission controller 30 is configured to include two power controllers 34, such as the power controller 34A and the power controller 34B. Further, the electronic device 1 shown in FIG. 5 is configured to include two power amplifiers 36, such as the power amplifier 36A and the power amplifier 36B.

The electronic device 1 shown in FIG. 5 comprises two transmitting antennas 40, but the number of transmitting antennas 40 comprised by the electronic device 1 according to an embodiment may be any plurality, for example, three or more. In this case, the electronic device 1 according to an embodiment may comprise the same number of power amplifiers 36 as that of the plurality of transmitting antennas 40. Further, in this case, the electronic device 1 according to an embodiment may comprise the same number of phase controllers 32 and power controllers 34 as that of the plurality of transmitting antennas 40.

The receiving antenna 50 receives the reflected waves R. The reflected waves R are transmitted waves T reflected by a predetermined object 200. The receiving antenna 50 may be configured to include a plurality of antennas, such as the receiving antenna 50A and the receiving antenna 50B. Because the receiving antenna 50 can be configured in the same manner as the receiving antenna being used in known radar technique, a more detailed description thereof will be omitted. The receiving antenna 50 is connected to the LNA 52. The received signal based on the reflected wave R received by the receiving antenna 50 is supplied to the LNA 52.

The electronic device 1 according to an embodiment can receive, from a plurality of receiving antennas 50, reflected waves R in which transmitted waves T transmitted as transmitted signals, such as chirp signals, are reflected by a predetermined object 200. Here, at least one functional part constituting the electronic device 1, such as the plurality of receiving antennas 50, may be housed in an enclosure with a structure that cannot be easily opened in a single enclosure. If the sensor 5 is installed in a mobile body 100, such as an automobile, the receiving antenna 50 may receive the reflected wave R from outside of the mobile body 100, for example, through a member such as a radar cover. In this case, the radar cover may be made of a substance that allows electromagnetic waves to pass through, such as synthetic resin or rubber. This radar cover may be, for example, a housing of the sensor 5. By covering the receiving antenna 50 with a member such as the radar cover, risks that the receiving antenna 50 is damaged or malfunctions due to contact with external objects can be reduced.

Further, the sensor 5 may include, for example, all transmitting antennas 40 and all receiving antennas 50. Further, when the receiving antenna 50 is installed near the transmitting antenna 40, these may be configured to be collectively included in one sensor 5. That is, one sensor 5 may include, for example, at least one transmitting antenna 40 and at least one receiving antenna 50. For example, one sensor 5 may include a plurality of transmitting antennas 40 and a plurality of receiving antennas 50. In such a case, for example, one radar sensor may be covered with a member such as one radar cover.

The LNA 52 amplifies the received signal based on the reflected wave R received by the receiving antenna 50 with low noise. The LNA 52 may be used as a low noise amplifier, and amplifies the received signal supplied from the receiving antenna 50 with low noise. The received signal amplified by the LNA 52 is supplied to the mixer 54.

The mixer 54 generates a beat signal by mixing (multiplying) the received signal of the RF frequency supplied from the LNA 52 with the transmitted signal supplied from the frequency synthesizer 24. The beat signal mixed by the mixer 54 is supplied to the IF part 56.

The IF part 56 lowers the frequency of the beat signal to an intermediate frequency (IF (Intermediate Frequency) frequency) by performing frequency conversion on the beat signal supplied from the mixer 54. The beat signal whose frequency is lowered by the IF part 56 is supplied to the AD converter 58.

The AD converter 58 digitizes the analog beat signal supplied from the IF part 56. The AD converter 58 may be configured by any analog to digital conversion circuit (Analog to Digital Converter (ADC)). The beat signal digitized by the AD converter 58 is supplied to the distance estimator 62 when there is one receiving antenna 50, and to both the distance estimator 62 and the angle estimator 64 when there are a plurality of receiving antennas 50.

The distance estimator 62 estimates the distance between the mobile body 100 equipped with the electronic device 1 and the object 200 based on the beat signal supplied from the AD converter 58. The distance estimator 62 may include, for example, an FFT processor. In this case, the FFT processor may be configured by any circuit or chip configured to perform Fast Fourier Transform (FFT) process. The FFT processor performs a FFT process on the beat signal digitized by the AD converter 58. For example, the distance estimator 62 may perform the FFT process on complex signals supplied from the AD converter 58. When the peak in the result obtained by performing the FFT process is equal to or higher than a predetermined threshold value, the distance estimator 62 may determine that the predetermined object 200 exists at a distance corresponding to the peak. The distance information estimated by the distance estimator 62 may be supplied to the controller 10, for example.

The angle estimator 64 estimates direction facing the object 200 (that is, the direction in which the reflected wave R arrives at the receiving antenna 50) from the mobile body 100 equipped with the electronic device 1, based on the beat signal supplied from the AD converter 58. The angle estimator 64 may also include, for example, an FFT processor as well as the distance estimator 62. As described above, the distance estimator 62 performs the FFT process on the complex signal supplied from the AD converter 58, and when the peak obtained as a result of performing the FFT process is equal to or higher than a predetermined threshold value, it may be determined that the predetermined object 200 exists at a distance corresponding to the peak. In this case, the angle estimator 64 may estimate the direction in which the reflected wave R arrived at the receiving antenna 50 (that is, the direction facing the receiving antenna 50 from the object 200) based on the results of receiving the reflected waves R from the predetermined object 200 by the plurality of receiving antennas 50. The information of the direction (arrival direction or angle of arrival) estimated by the angle estimator 64 may be supplied to the controller 10, for example.

The relative speed estimator 66 estimates the relative speed between the object 200 and the mobile body 100 based on the beat signal.

Generally, a frequency spectrum can be obtained by performing the FFT process on the beat signal.From this frequency spectrum, the FFT processor described above can estimate whether the predetermined object 200 exists within the range of the beam of the transmitted wave T to be transmitted from the transmitting antenna 40. That is, the FFT processor can estimate whether the predetermined object 200 exists within the range of the beam emitted by the sensor 5 comprising the transmitting antenna 40, based on the beat signal on which the FFT process is performed. Further, the FFT processor can also estimate the distance between the sensor 5 equipped with the transmitting antenna 40 and the object 200 when a predetermined object 200 exists, based on the beat signal on which the FFT process is performed. In addition, the FFT processor can also estimate the positional relationship between the sensor 5 equipped with the transmitting antenna 40 and the object 200 when a predetermined object 200 exists, based on the beat signal on which the FFT process is performed.

Thus, the electronic device 1 according to an embodiment may measure (estimate) the distance between the object 200 and the mobile body 100 based on the beat signal obtained from the signal transmitted as the transmitted wave T and the signal received as the reflected wave R. Further, the electronic device 1 according to an embodiment may measure (estimate) the positional relationship between the object 200 and the mobile body 100 (for example, the arrival angle at which the reflected wave R arrives at the mobile body 100 from the object 200) based on the beat signal. Further, the electronic device 1 according to an embodiment may measure (estimate) the relative speed between the object 200 and the mobile body 100 based on the beat signal. Further, the controller 10 may also perform various calculations, estimations, and controls based on the distance information supplied by the distance estimator 62 and / or the directional (angle) information supplied by the angle estimator 64. For example, because the technique itself for estimating the distance and / or direction to a predetermined object on which the reflected wave is reflected is known based on a beat signal acquired by using a millimeter wave radar such as that in the 79 GHz band, more detailed description will be omitted.

The electronic device 1 shown in FIG. 5 comprises two receiving antennas 50 such as the receiving antenna 50A and the receiving antenna 50B, and receives the reflected waves R by the two receiving antennas 50. Therefore, the electronic device 1 shown in FIG. 5 is configured to include two functional parts, each of which is necessary for receiving the reflected wave R from the two receiving antennas 50. Specifically, the electronic device 1 is configured to include two LNAs 52, two mixers 54, two IF parts 56, and two AD converters 58.

The electronic device 1 shown in FIG. 5 comprises two receiving antennas 50, but a number of receiving antennas 50 comprised by the electronic device 1 according to an embodiment may be any plurality. In this case, the electronic device 1 according to an embodiment may respectively comprise the same number of functional parts as that of the plurality of receiving antennas 50, instead of two each functional parts as described above.

Next, transmitted waves to be transmitted by the electronic device 1 according to an embodiment will be described.

When measuring distance or the like by a millimeter wave radar, a frequency modulated continuous wave radar (hereafter referred to as FMCW radar (Frequency Modulated Continuous Wave radar)) is often used. The FMCW radar generates transmitted signals by sweeping frequencies of radio waves to be transmitted. Therefore, for example, in a millimeter wave FMCW radar that uses radio waves in the 79 GHz frequency band, the frequency of the radio waves used will have a frequency bandwidth of 4 GHz, for example, such as 77 GHz to 81 GHz. A radar in the 79 GHz frequency band is characterized by a wider usable frequency bandwidth than other millimeter wave / quasi-millimeter wave radars, such as radars in the 24 GHz, 60 GHz, and 76 GHz frequency bands. The FMCW radar method used in the present disclosure may include the FCM (Fast-Chirp Modulation) method, which transmits chirp signals with a shorter cycle than usual. The signals generated by a signal generator 21 are not limited to signals of FM-CW method. The signals generated by the signal generator 21 may be signals of various methods other than the FM-CW method. For example, the transmitted signal sequence stored in a storage 12 may be different for these various methods. For example, in the case of radar signals of FM-CW method described above, signals whose frequency increases and decreases with each time sample may be used. Because known techniques can be appropriately applied to the various methods described above, more detailed description thereof will be omitted.

As described above, by forming a beam of radio waves to be transmitted from a plurality of transmitting antennas 40 (beamforming), the transmitted waves in a predetermined direction can be intensified each other. In this way, the electronic device 1 can enhance the accuracy of measuring the distance between the mobile body 100 equipped with the electronic device 1 and the object 200, and / or the direction of the object 200. Therefore, the electronic device 1 according to an embodiment uses radio waves whose frequencies change with the passage of time as transmission waves, such as an FMCW radar, and performs beamforming as necessary by such transmitted waves. Hereinafter, such an embodiment will be further described.

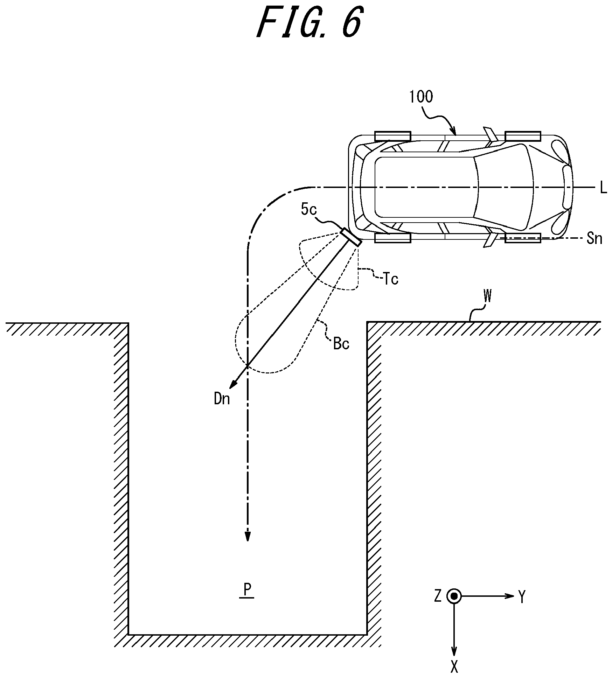

FIGS. 6 to 9 are diagrams for explaining examples of operation of the electronic device 1 according to an embodiment.

It is assumed that the mobile body 100 shown in FIG. 6 is equipped with the electronic device 1 according to an embodiment. Further, as shown in FIG. 6, it is assumed that at least the sensor 5c is installed in the mobile body 100 among the plurality of sensors 5 shown in FIG. 3. Further, in the following description, it is assumed that the control of each functional part constituting the electronic device 1 can be controlled by at least one of the controller 10, the transmission controller 30, and the mobile body controller 70.

Hereinafter, as an example, operation after the electronic device 1 mounted on the mobile body 100 detects a space in which the mobile body 100 can be stopped or parked (hereinafter referred to as a stop space) will be described. As shown in FIG. 6, it is assumed that the electronic device 1 mounted on the mobile body 100 has detected a space (stop space P) in which the mobile body 100 can be stopped. On the other hand, the stop space P may be visually detected by the driver of the mobile body 100. Then, the electronic device 1 detects an object existing around the mobile body 100 while the mobile body 100 is moved to the stop space P. By such an operation, the mobile body 100 can move to the stop space P not to collide with or contact with an obstacle such as a wall W of the stop space P.

In the following description, the mobile body 100 may be moved to the stop space P by the driver of the mobile body 100, or the mobile body 100 may be travelled to the stop space P by automated driving.

FIG. 6 shows the situation when the mobile body 100 is looking for a stop space while moving forward, and when it detects a stop space P. At the time point shown in Fig. 6, it is assumed that the mobile body 100 has detected the stop space P and is temporarily stopped. At this time point, it is assumed that the electronic device 1 causes the sensor 5c to operate in the normal mode and thereby the transmitted wave Tc is transmitted from the sensor 5c. As described above, the electronic device 1 can transmit transmitted waves with a relatively wide beam width, such as the transmitted wave Tc, in the normal mode.

After the stop space P is detected, the driver of the mobile body 100 can, for example, temporarily stop the mobile body 100 and then start the stopping operation of the mobile body 100. At this time point, the electronic device 1 may determine that the stopping operation of the mobile body 100 is started, triggered by the fact that a switch such as a "stop button" is pressed by the driver of the mobile body 100, for example. Here, if the mobile body 100 is compatible with automated driving, the mobile body 100 may automatically move to the stop space P based on the detection by the electronic device 1 when the stopping operation starts. On the other hand, if the mobile body 100 does not support automated driving, the driver of the mobile body 100 may press a switch such as the stop button and then drive the mobile body 100 to the stop space P. In either case, it is preferable that the electronic device 1 performs detection suitable for the situation when the mobile body 100 is moved to the stop space P.

Therefore, when the stopping operation of the mobile body 100 is started, the electronic device 1 operates the sensor 5c in the BF mode so that the beam Bc of the transmitted wave to be transmitted from the sensor 5c is formed. That is, the electronic device 1 switches the transmitted wave Tc to the beam Bc formed by the transmitted wave. As described above, in the operation of the BF mode, the beam Bc may have a beam width in a range narrower than the beam width of the transmitted wave Tc. Further, as described above, the transmitted wave forming the beam Bc may have a longer reachable range than the transmitted wave Tc.

After that, while the mobile body 100 moves backward to the stop space P, the electronic device 1 detects a predetermined object existing around the mobile body 100 by a beam Bc, for example. When a predetermined object such as an obstacle existing around the mobile body 100 is not detected, the mobile body 100 can move to the stop space P by following the path L shown in FIG. 6.

At the time point shown in Fig. 6, the beam Bc formed by the transmitted wave to be transmitted from the sensor 5c shall have a main lobe in the direction Dn shown in FIG. 6. Further, it is assumed that the mobile body 100 has not turned the steering wheel 82 neither to the right nor left because it stopped at the time point shown in Fig. 6 after going straight ahead. That is, at the time point shown in Fig. 6, it is assumed that the turning angle of the steering wheel 82 of the mobile body 100 is zero. In FIG. 6, the steering direction in which the turning angle of the steering wheel 82 of the mobile body 100 becomes zero is shown as the direction Sn. In FIG. 6, the steering direction Sn in which the turning angle of the steering wheel 82 of the mobile body 100 becomes zero is shown as the steering direction of the tires (front wheels) of the mobile body 100 as an example. In FIG. 6, the direction Sn may be the steering reference direction and the direction Dn may be the beam reference direction.

Further, in an embodiment, at the time point shown in Fig. 6, the electronic device 1 may switch the operation of the sensor 5c installed at the rear portion of the mobile body 100 to the BF mode, triggered by the fact that the gear 84 of the mobile body 100 is switched to backward travel. That is, the electronic device 1 may transmit the transmitted wave T by, for example, causing the sensor 5 other than the sensor 5c to operate in the normal mode until the gear 84 of the mobile body 100 is switched to the backward travel. In this case, when the gear 84 of the mobile body 100 is switched to backward travel, the electronic device 1 may switch at least the operation of the sensor 5c to the BF mode. In this case, the electronic device 1 may leave the sensor 5 other than the sensor 5c in the normal mode of operation, or may turn off the operation of the sensor 5 other than the sensor 5c. On the other hand, at the time point shown in Fig. 6, the electronic device 1 may switch the operation of the sensor 5 installed at the front portion of the mobile body 100 to the BF mode if, for example, it determines that the mobile body 100 moves forward to the stop space P.

Further, in an embodiment, at the time point shown in Fig. 6, the electronic device 1 may switch the operation of the sensor 5c installed on the right side of the mobile body 100 to the BF mode, triggered by the fact that the steering wheel 82 of the mobile body 100 is slightly changed to the right direction. On the other hand, at the time point shown in Fig. 6, when the electronic device 1 determines that the steering wheel 82 of the mobile body 100 has been slightly changed to the left direction, it may switch the operation of the sensor 5 installed on the left side of the mobile body 100 to BF mode.

As described above, the electronic device 1 may comprise a plurality of sensors 5. In this case, for example, the transmission controller 30 may select a sensor in which transmitted waves form a beam in a predetermined direction among the plurality of sensors 5 according to at least one of the traveling direction of the mobile body 100 and the steering direction of the mobile body 100. Here, the traveling direction of the mobile body 100 (for example, the forward direction / the backward direction) may be determined from, for example, the switching state of the gear 84 of the mobile body 100 and / or the operating state of the throttle. Further, the steering direction of the mobile body 100 (for example, left / right) may be determined from, for example, the steering state of the steering wheel 82 of the mobile body 100.

At the time point shown in FIG. 6, the electronic device 1 has switched the operation of the sensor 5c installed at the rear right side of the mobile body 100 to the BF mode. In this case, the electronic device 1 may determine that the mobile body 100 moves backward from the switching state of the gear 84 of the mobile body 100 and / or the operating state of the throttle. Further, the electronic device 1 may determine that the mobile body 100 is steered to the right (with respect to the forward direction of the mobile body 100) based on the steering state of the steering wheel 82 of the mobile body 100 and the like.

In the situation shown in FIG. 6, in order to move the mobile body 100 to the stop space P, it is necessary to move backward while steering the steering 82 to the right. Further, at the time point shown in FIG. 6, the electronics 1 is operating so that the beam Bc of the transmitted waves to be transmitted from the sensor 5c is formed. However, as described above, although the beam Bc has a relatively long reachable distance, the beam width is in a relatively narrow range. Therefore, in the example shown in FIG. 6, the electronic device 1 cannot detect an obstacle such as a wall W of the stop space P by the beam Bc directed from the sensor 5c to the direction Dn.

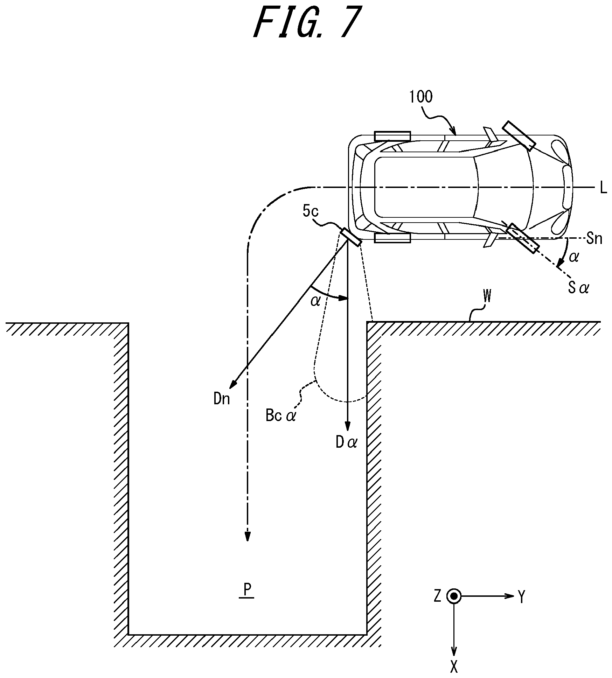

FIG. 7 is a diagram for showing a state in which the steering wheel 82 is steered relatively large (with a large turning angle) to the right, in the mobile body 100 from the situation shown in FIG. 6. At the time point shown in Fig. 7, it may be assumed that the mobile body 100 has not yet been moved backward (That is, in a temporarily stopping state).

FIG. 7 shows a state in which the steering wheel 82 of the mobile body 100 is steered toward the steering direction Sα. As shown in FIG. 7, the steering direction Sα indicates the direction in which the mobile body 100 is steered to the right by an angle α, from the steering direction Sn with turning angle zero. Also in FIG. 7, the steering direction Sn in which the turning angle of the steering wheel 82 of the mobile body 100 becomes zero is shown as the steering direction of the tires (front wheels) of the mobile body 100 as an example. Further, also in FIG. 7, the steering direction Sα of the steering wheel 82 of the mobile body 100 is also shown as the steering direction of the tires (front wheels) of the mobile body 100.

When the steering direction is changed from Sn to Sα, the electronic device 1 according to an embodiment controls so that the direction of the beam Bc formed by the transmitted waves to be transmitted from the sensor 5c is also changed according to magnitude (angle α) of the changed steering direction. As the steering wheel 82 of the mobile body 100 is steered toward the steering direction Sα, FIG. 7 shows a state in which the direction of the beam Bc (FIG. 6) of the transmitted waves to be transmitted from the sensor 5c has been changed to beam Bcα. The direction Dn of the main lobe in the beam Bc shown in FIG. 6 changes to the direction Dα of the main lobe in the beam Bcα shown in FIG. 7. Here, the angle α in which the steering direction changes from the direction Sn to the direction Sα and the angle α in which the direction of the main lobe of the beam changes from the direction Dn to the direction Dα may be the same angle, or one angle may become a constant or exponential multiple of the other angle, for example. In the present disclosure, the relationship between one angle and the other angle may be, for example, a predetermined functional relationship in which one angle is a variable and the other angle is an output.

As shown in FIGS. 6 and 7, when changing the direction of the beam of the transmitted waves to be transmitted from the sensor 5c, for example, the transmission controller 30 may change the phase of at least one of the transmitted waves to be transmitted from the plurality of transmitting antennas 40. Such a phase change may be performed by the phase controller 32 in the transmission controller 30. In this way, the transmission controller 30 may control (change) the predetermined direction in which the beam of transmitted waves is formed by changing the phase of at least one of the transmitted waves to be transmitted from the plurality of transmit antennas 40.

As shown in FIG. 7, the electronic device 1 according to an embodiment can detect the wall W of the stop space P as an obstacle at this time point. Therefore, at the time point shown in FIG. 7, the mobile body 100 can safely start moving backward while detecting surrounding obstacles by the electronic device 1. Thus, according to the electronic device 1 of an embodiment, the beam of the transmitted waves to be transmitted from the sensor 5 can be directed, so to speak, ahead of time, to the direction in which the direction change is about to take place. Further, according to the electronic device 1 of an embodiment, the direction of the beam of the transmitted waves to be transmitted from the sensor 5 can be changed significantly by turning the steering wheel 82 significantly.

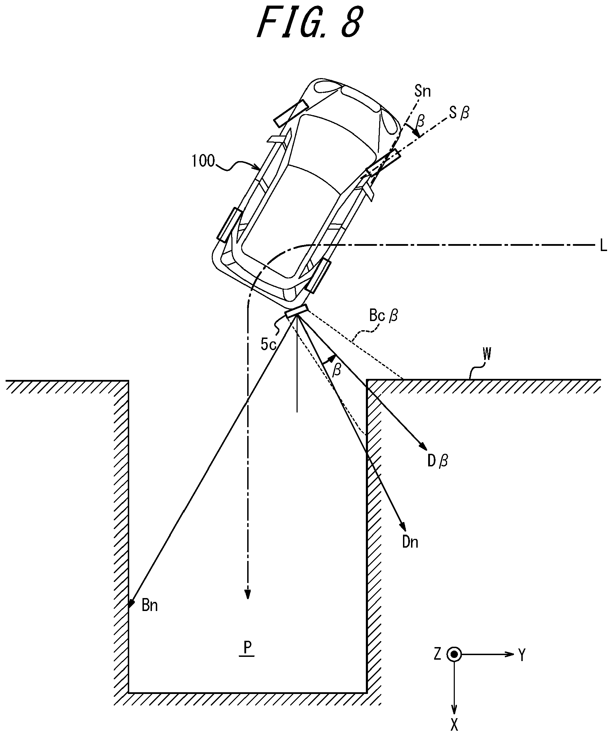

FIG. 8 is a diagram for showing a state in which the mobile body 100 is slightly moved backward from the state in which the steering wheel 82 is steered to the right, in the mobile body 100 as shown in FIG. 7.

At the time point shown in FIG. 7, the steering wheel 82 was steered relatively a lot to the right (at a large turning angle α) when the mobile body 100 started to move backward. When the mobile body 100 starts moving backward in this situation, the traveling direction of the mobile body 100 is changed comparatively a lot. On the other hand, at the time point shown in FIG. 8, because the traveling direction of the mobile body 100 has already been changed to some extent, the state in which the turning angle of the steering wheel 82 of the mobile body 100 is slightly returned is shown.

FIG. 8 shows a state in which the steering wheel 82 of the mobile body 100 is steered toward the steering direction Sβ. Here, the steering direction Sβ may be an angle smaller than the steering direction Sα shown in FIG. 7. As shown in FIG. 8, the steering direction Sβ indicates a direction in which the steering wheel is steered to the right by an angle β from the steering direction Sn with turning angle zero. In FIG. 8, the steering direction Sn, in which the turning angle of the steering wheel 82 of the mobile body 100 becomes zero, is also shown as the steering direction of the tires (front wheels) of the mobile body 100 as an example. Further, in FIG. 8, the steering direction Sβ of the steering wheel 82 of the mobile body 100 is also shown as the steering direction of the tires (front wheels) of the mobile body 100.

When the steering direction is changed from Sα to Sβ, the electronic device 1 according to an embodiment controls so that the direction of the beam Bc formed by the transmitted waves to be transmitted from the sensor 5c is also changed according to magnitude (angle β) of the changed steering direction. FIG. 8 shows a state that as the steering wheel 82 of the mobile body 100 has been steered toward the steering direction Sβ, the direction of the beam Bcα (FIG. 7) of the transmitted waves to be transmitted from the sensor 5c has been changed like the beam Bcβ. The direction Dα of the main lobe in the beam Bcα shown in FIG. 7 changes to the direction Dβ of the main lobe in the beam Bcβ shown in FIG. 8. Also here, the angle β from the steering direction Sn to the direction Sβ and the angle β from the beam main lobe direction Dn to the direction Dβ may be the same angle, or one angle may become a constant or exponential multiple of the other angle, for example.

As shown in FIG. 8, the electronic device 1 according to an embodiment can detect the wall W of the stop space P as an obstacle even at this time point. Therefore, even at the time point shown in FIG. 8, the mobile body 100 can safely continue to move backward while detecting surrounding obstacles by the electronic device 1. For example, the electronic device 1 may also detect the backward direction Bn from the mobile body 100. As a result, the mobile body 100 can safely continue to move backward. Thus, according to the electronic device 1 of an embodiment, the beam of the transmitted waves to be transmitted from the sensor 5 can be directed, so to speak, ahead of time, to the direction in which the direction change is about to take place. Further, according to the electronic device 1 of an embodiment, the direction of the beam of the transmitted waves to be transmitted from the sensor 5 can be changed a little by turning the steering wheel 82 a little.

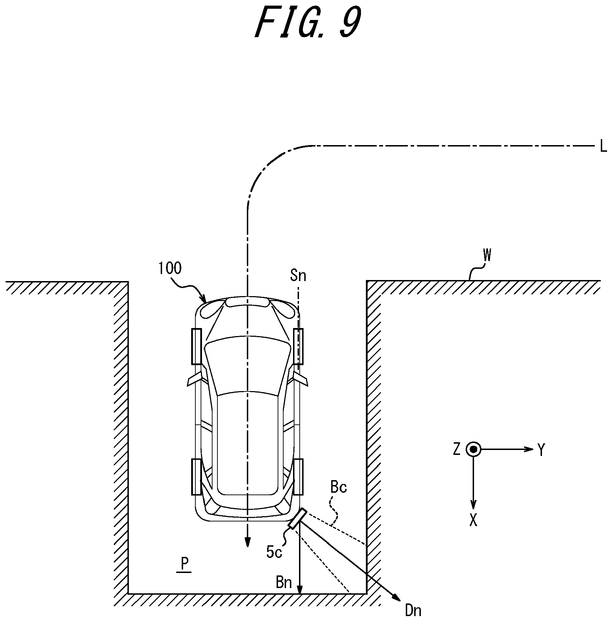

FIG. 9 is a diagram for showing the state in which the mobile body 100 is further moved backward a little from the state in which the mobile body 100 is moved backward while the steering wheel 82 is steered to the right as shown in FIG. 8.

At the time point shown in FIG. 8, the steering wheel 82 was steered to the right comparatively a little (at a small turning angle β) when the mobile body 100 started to move backward.When the vehicle continues to move backward in this situation, the traveling direction of the mobile body 100 is changed comparatively a little. On the other hand, at the time point shown in FIG. 9, because it is no longer necessary to change the traveling direction of the mobile body 100, FIG. 9 shows a state in which the turning angle of the steering wheel 82 of the mobile body 100 is almost completely returned.

FIG. 9 shows a state in which the steering wheel 82 of the mobile body 100 is returned to the steering direction Sn. Also in FIG. 9, the steering direction Sn in which the turning angle of the steering wheel 82 of the mobile body 100 becomes zero is shown as the steering direction of the tires (front wheels) of the mobile body 100 as an example. Further, in FIG. 9, the steering direction Sn of the steering wheel 82 of the mobile body 100 is also shown as the steering direction of the tires (front wheels) of the mobile body 100.

When the steering direction is changed to Sn, the electronic device 1 according to an embodiment controls so that the direction of the beam Bc formed by the transmitted waves to be transmitted from the sensor 5c is also changed according to magnitude (angle zero) of the changed steering direction. FIG. 9 shows the state in which as the steering wheel 82 of the mobile body 100 is returned toward the steering direction Sn, the direction of the beam Bcβ (FIG. 8) of the transmitted waves to be transmitted from the sensor 5c is changed like the beam Bc. The direction Dβ of the main lobe in the beam Bcβ shown in FIG. 8 changes to the direction Dn of the main lobe in the beam Bc shown in FIG. 9.

As shown in FIG. 9, the electronic device 1 according to an embodiment can detect the wall W of the stop space P as an obstacle even at this time point. Therefore, even at the time point shown in FIG. 9, the mobile body 100 can safely stop from the backward travel while detecting surrounding obstacles by the electronic device 1. Further, for example, as shown in FIG. 9, the electronic device 1 may also detect the backward direction Bn from the mobile body 100. As a result, the mobile body 100 can safely stop from the backward travel.

In this way, as shown in FIGS. 6 to 9, the mobile body 100 can move to the stop space P by following the path L while monitoring surrounding obstacles.

Next, operation of the electronic device 1 according to an embodiment will be further described.

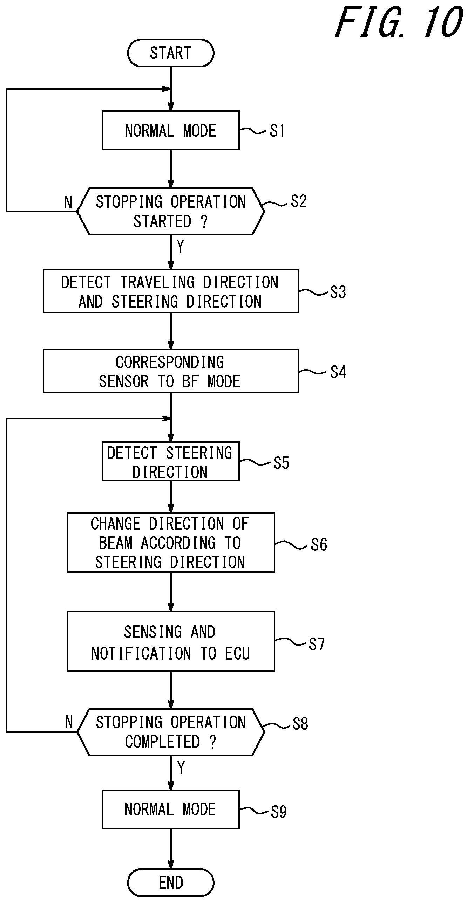

FIG. 10 is a flowchart for explaining operation of the electronic device 1 according to an embodiment. The operation shown in FIG. 10 may be started, for example, when the electronic device 1 detects the stop space P of the mobile body 100 and then the mobile body 100 is about to start moving toward the stop space P. That is, the time point at which the operation shown in FIG. 10 starts may correspond to the situation described in FIG. 6. In the following description, it is assumed that the control of each functional part constituting the electronic device 1 can be controlled by at least one of the controller 10, the transmission controller 30, and the mobile body controller 70.

When the operation shown in FIG. 10 starts, the electronic device 1 operates in the normal mode (Step S1). Specifically, in step S1, the electronic device 1 may control to set the operation mode of each sensor 5 to the normal mode based on the control by the controller 10 and / or the control by the transmission controller 30. Here, the electronic device 1 may switch the operation mode to the normal mode when the process of step S1 starts, or may continue the operation in the normal mode before the start of step S1. The time point when the operation of step S1 is performed corresponds to the situation in which the sensor 5 is transmitting the transmitted wave Tc, for example, in FIG. 6.

When the operation in the normal mode starts in step S1, the controller 10 determines whether the stopping operation has been started (step S2). Whether the stopping operation is started in step S2 may be determined based on whether a switch such as the "stop button" is turned on, as described above. Further, whether the detection of the stopping operation is started in step S2 may be determined based on an automated (not performed by the driver) trigger by the mobile body controller 70, for example, in the case of automated driving.

If the stopping operation has not been started in step S2, the controller 10 returns to step S1 and continues the operation in the normal mode.

On the other hand, when the stopping operation is started in step S2, the controller 10 detects the traveling direction and the steering direction of the mobile body 100 (step S3). As described above, the traveling direction of the mobile body 100 (for example, the forward direction / the backward direction) may be determined from, for example, the switching state of the gear 84 of the mobile body 100 and / or the operating state of the throttle. Further, the steering direction of the mobile body 100 (for example, left / right) may be determined from, for example, the steering state of the steering wheel 82 of the mobile body 100. Further, the traveling direction and the steering direction of the mobile body 100 may be determined not only from the situation of the mobile body 100 but also from the positional relationship between the stop space P and the mobile body 100.

When the traveling direction and steering direction of the mobile body 100 are detected in step S3, the controller 10 sets the operation mode of the sensor 5 corresponding to the traveling direction and steering direction of the mobile body 100 to the BF mode (step S4). Specifically, in step S4, the electronic device 1 may control to set the operation mode of each sensor 5 to the BF mode based on the control by the controller 10 and / or the control by the transmission controller 30.

Here, for example, when it is determined that the mobile body 100 moves forward, the controller 10 may set the operation mode of the sensors 5 arranged in the front direction of the mobile body 100 among the plurality of sensors 5 to the BF mode. Further, for example, when it is determined that the mobile body 100 moves backward, the controller 10 may set the operation mode of the sensors 5 arranged in the rear direction of the mobile body 100 among the plurality of sensors 5 to the BF mode. Further, for example, when it is determined that the steering direction of the mobile body 100 is to the left, the controller 10 may set the operation mode of the sensors 5 arranged on the left side of the mobile body 100 among the plurality of sensors 5 to the BF mode. Further, for example, when it is determined that the steering direction of the mobile body 100 is to the right, the controller 10 may set the operation mode of the sensors 5 arranged on the right side of the mobile body 100 among the plurality of sensors 5 to the BF mode.

In particular, in the BF mode of step S4, the transmission controller 30 may control a predetermined direction in which the beam of the transmitted waves is formed by changing at least one phase of the transmitted waves to be transmitted from the plurality of transmitting antennas 40. The time point when the operation of step S4 is performed corresponds to, for example, the situation in FIG. 6 in which the sensor 5 forms the beam Bc of the transmitted waves.

In short, in the operations from steps S1 to S4, the transmission controller 30 causes the sensor 5 which is supposed to play an important role in the stopping operation by detecting the stopping operation of the mobile body 100 to operate in the BF mode. Thus, for example, such as in a stopping operation of the mobile body 100, the transmission controller 30 may control so that the transmitted waves to be transmitted from the plurality of transmitting antennas 40 form a beam in a predetermined direction during a predetermined operation of the mobile body 100.

When the operation mode of the sensor 5 is set to the BF mode in step S4, the controller 10 detects the steering direction of the mobile body 100 (step S5). In step S5, the controller 10 may detect the steering direction of the mobile body 100, for example, by acquiring information indicating the turning angle of the steering wheel 82 from the mobile body controller 70.

By the process of step S5, the controller 10 detects the steering direction of the mobile body 100 as the direction Sn (steering angle zero) in the situations shown in FIGS. 6 and 9. Further, by the process of step S5, the controller 10 detects the steering direction of the mobile body 100 as the direction Sα (steering angle α) in the situation shown in FIG. 7. Further, by the process of step S5, the controller 10 detects the steering direction of the mobile body 100 as the direction Sβ (steering angle β) in the situation shown in FIG. 8.

When the steering direction is detected in step S5, the transmission controller 30 controls so that the direction of the beam of the transmitted waves to be transmitted from the sensor 5, operating in the BF mode, is appropriately changed according to the detected steering direction (step S6). As described above, in step S6, the angle at which the steering direction changes and the angle at which the beam direction changes may be the same angle, or one angle may be a constant multiple of the other angle, for example. In step S6, the transmission controller 30 controls the direction of the beam of the transmitted waves to be transmitted from the sensor 5 to the predetermined direction, and then transmits the transmitted waves from the sensor 5.

By the process of step S6, the controller 10 controls so that the direction of the beam of the transmitted waves to be transmitted from the sensor 5c becomes the direction Dα in the situation (steering angle α) shown in FIG. 7. Further, by the process of step S6, the controller 10 controls so that the direction of the beam of the transmitted waves to be transmitted from the sensor 5c becomes the direction Dβ in the situation (steering angle β) shown in FIG. 8. On the other hand, by the process of step S6, the controller 10 controls so that the direction of the beam of the transmitted waves to be transmitted from the sensor 5c becomes the direction Dn in the situation (steering angle zero) shown in FIGS. 6 and 9.

When the beam whose direction is controlled is transmitted in step S6, the controller 10 detects (sensing) an object by the beam (step S7). In step S7, the controller 10 transmits the transmitted waves T from the transmitting antenna 40, and receives the reflected waves R obtained by reflection of the transmitted waves T on the predetermined object 200 or the like, from the receiving antenna 50. In this way, the controller 10 may detect objects around the mobile body 100 based on the transmitted signals to be transmitted as the transmitted waves from the transmitting antenna 40 and the received signals received as the reflected waves R from the receiving antenna 50.

Further, in step S7, the controller 10 may notify the mobile body controller 70 of results of detecting objects. The mobile body controller 70 may control the automated driving by the mobile body 100 based on the results of the detection of the objects notified from the controller 10. Further, the mobile body controller 70 may control to assist the driving by the driver of the mobile body 100 based on the results of the detection of the objects notified from the controller 10. Further, in step S7, the controller 10 may notify the results of the detection of the objects, for example, as information for calling attention from the communicator 90.

When the detection and notification are performed in step S7, the controller 10 determines whether the stopping operation is completed (step S8). Whether the stopping operation is completed in step S8 may be determined based on whether a switch such as the "stop button" is turned off. Further, whether the detection of the stopping operation is completed in step S8 may be determined based on an automated trigger (for example, the fact that the stopping operation is completed) by the mobile body controller 70 in the case of automates driving, for example.

If the stopping operation is not completed in step S8, the controller 10 returns to step S5 and continues the operation from steps S5 to S7.

On the other hand, when the stopping operation is completed in step S8, the controller 10 changes the operation mode of the sensor 5, that was set to the BF mode in step S4, to the normal mode (step S9), and ends the operation shown in FIG. 10. Further, in step S9, the controller 10 may control, for example, to turn off all of the plurality of sensors 5.

As described above, in the electronic device 1 according to an embodiment, the transmission controller 30 controls so that the transmitted waves to be transmitted from the plurality of transmitting antennas 40 form a beam in a predetermined direction. Further, the transmission controller 30 controls the predetermined direction in which the beam of the transmitted waves is formed according to the steering direction of the mobile body 100. As described above, according to the electronic device 1 of an embodiment, it is possible to direct the predetermined direction in which the beam of the transmitted waves is formed to the region where the steering direction of the mobile body 100 changes. Therefore, according to the electronic device 1 of an embodiment, it is possible to enhance safety during maneuvering of the mobile body 100.

Further, in an embodiment, the transmission controller 30 may control a predetermined direction in which the beam of the transmitted waves is formed according to the steering angle of the steering wheel of the mobile body 100. Further, in an embodiment, the transmission controller 30 may control the change in the predetermined direction, in which the beam of transmitted waves is formed, to increase as the change in the steering direction of the mobile body 100 increases.

The beam formation of the transmitted waves may also include the vertical direction. That is, if only the horizontal direction is detected, even parking curbs may be detected. Therefore, the antenna may be designed to narrow field of view (FoV, field of view) in the vertical plane of the antenna as a way to avoid detecting parking curbs.

As described above, according to the electronic device 1 of an embodiment, when the steering direction of the mobile body 100 changes significantly, the predetermined direction in which the beam of the transmitted waves is formed can be directed to the region where the steering direction of the mobile body 100 changes significantly. Therefore, according to the electronic device 1 of an embodiment, the safety during maneuvering of the mobile body 100 can be further enhanced.

In an embodiment, the transmission controller 30 may control so that the left and right of the steering direction of the mobile body 100 become the same as the left and right of the predetermined direction in which the beam is formed. As described above, according to the electronic device 1 of an embodiment, depending on the direction in which the steering direction of the mobile body 100 changes, a predetermined direction in which the beam of the transmitted waves is formed can be directed in that direction. Therefore, according to the electronic device 1 of an embodiment, the safety during maneuvering of the mobile body 100 can be further enhanced.

In the above description, as shown in FIGS. 6 to 9, an example in which the mobile body 100 is moving backward to the stop space P has been described. However, the electronic device 1 according to an embodiment can naturally be adapted to a situation in which the mobile body 100 is moving forward to the stop space P. The electronic device 1 according to an embodiment controls the direction in which the beam of transmitted waves to be transmitted from the sensor 5 is formed according to the steering direction of the mobile body 100 even if the mobile body 100 is moving forward to the stop space P. For example, when the steering direction of the mobile body 100 that is moving forward is changed to the right, the electronic device 1 according to an embodiment changes the direction, in which the beam of the transmitted waves to be transmitted from the sensor 5 is formed, to the right. Also in this case, according to the electronic device 1 of an embodiment, the predetermined direction in which the beam of the transmitted waves is formed can be directed to the region where the steering direction of the mobile body 100 changes. Therefore, according to the electronic device 1 of an embodiment, it is possible to enhance safety during maneuvering of the mobile body 100.

### (Second embodiment)

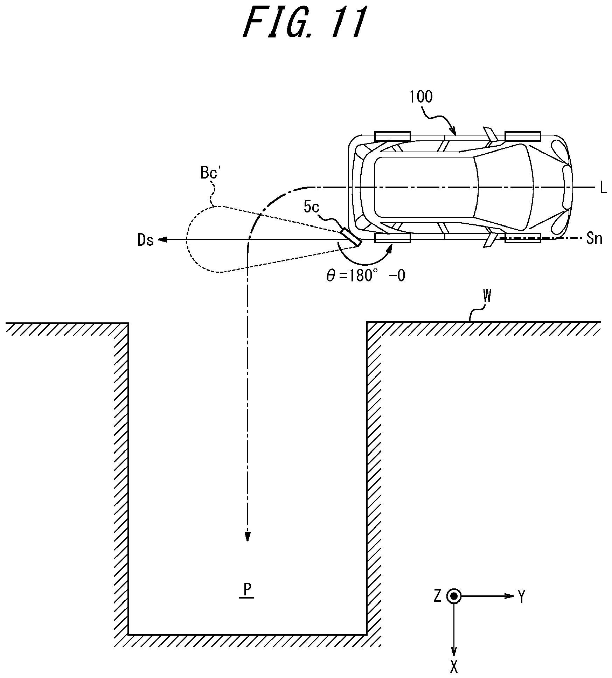

Next, a second embodiment of the present disclosure will be described with reference to FIGS. 11 to 14. In the second embodiment, as well as the embodiment described above, it is assumed that the steering direction is changed from Sn to Sα, Sβ, or the like from the start of the stopping operation to the end of the stopping operation. In this case, the electronic device 1 according to the second embodiment controls so that as well as the embodiment described above, the direction of the beam Bc formed by the transmitted waves to be transmitted from the sensor 5c is also changed according to magnitude of the changed steering direction (angle α, angle β, and the like). On the other hand, in the second embodiment, the beamforming direction of the transmitting antenna 40 is different from that of the embodiment described above. In the second embodiment, the direction of beamforming is provided as 180 - α degrees with respect to the mobile body side surface axis, that is, provided as an angle to be subtracted from 180 degrees with respect to the mobile body side surface axis. Here, the mobile body side surface axis is an axis extending in the traveling direction of the mobile body 100 and parallel to the mobile body side surface and the ground. Further, the mobile body side surface axis may be the direction Ds parallel to the steering direction Sn with turning angle zero. In FIG. 11, the direction Sn may be the steering reference direction and the direction Ds may be the beam reference direction.

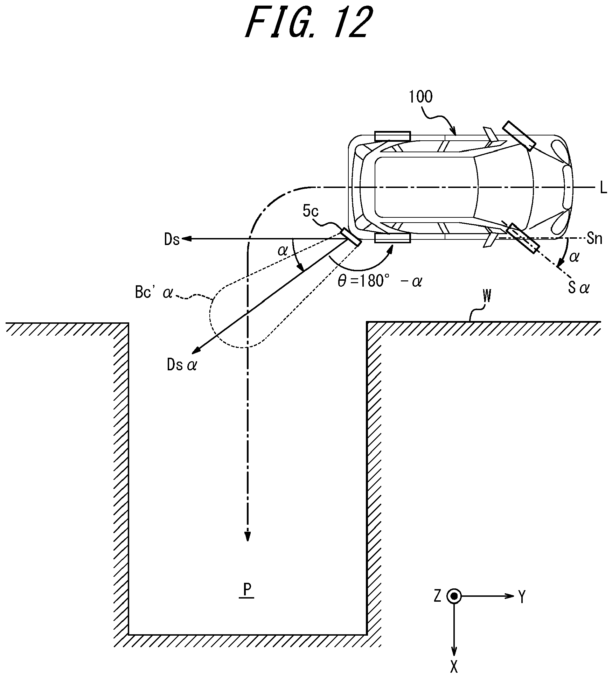

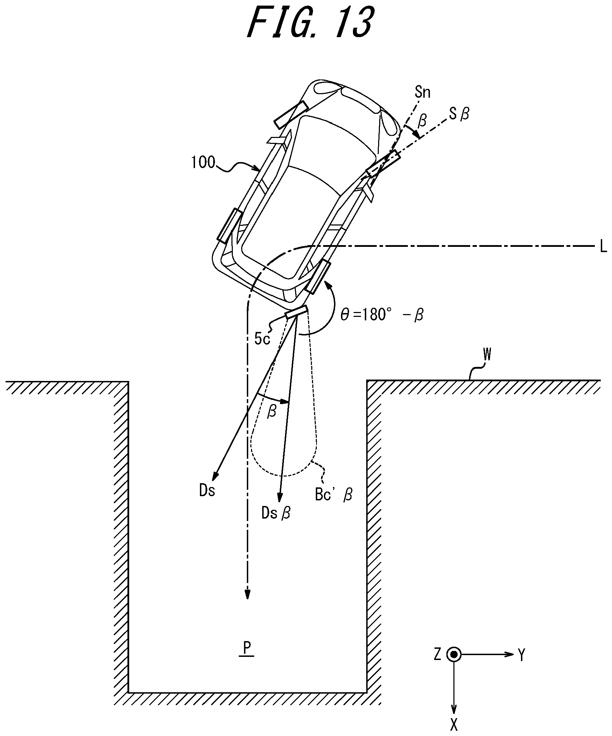

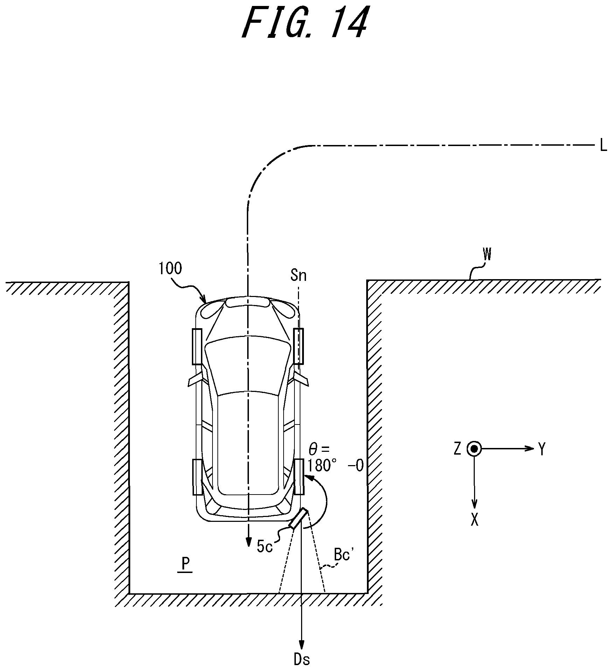

For example, as shown in FIGS. 11 and 14, when the steering direction is Sn (turning angle zero), the direction of the beam Bc' becomes the direction Ds, which is the direction of θ = 180 - 0 degrees with respect to the direction Ds parallel to the mobile body side surface axis. Further, as shown in Fig. 12, when the steering direction is Sα (turning angle α), the direction of the beam Bc'α becomes the direction Dsα, which is the direction of θ = 180 - α degrees with respect to the direction Ds parallel to the mobile body side surface axis. Further, as shown in FIG. 13, when the steering direction is Sβ (turning angle β), the direction of the beam Bc'β becomes the direction Dsβ, which is the direction of θ = 180 - β degrees with respect to the direction Ds parallel to the mobile body side surface axis.

As shown in FIGS. 11 to 14, when changing the direction of the beam of the transmitted waves to be transmitted from the sensor 5c, for example, the transmission controller 30 may change the phase of at least one of the transmitted waves to be transmitted from the plurality of transmitting antennas 40. Such a phase change may be performed by the phase controller 32 of the transmission controller 30. In this way, the transmission controller 30 controls (changes) a predetermined direction in which the beam of the transmitted waves is formed by changing at least one phase of the transmitted waves to be transmitted from the plurality of transmitting antennas 40. As described above, the operations of FIGS. 11 to 14 generally correspond to the operations of steps S5 to S8 of FIG. 10.

As described above, in the second embodiment, the beam of the sensor 5 is directed to the direction in which the mobile body 100 travels. Therefore, it becomes easy to detect an object existing in the direction in which the mobile body 100 travels.

The present disclosure has been described based on the drawings and examples, but it should be noted that those skilled in the art will find it easy to make various variations or modifications based on the present disclosure. Therefore, it should be noted that these variations or modifications are included in the scope of this disclosure. For example, the functions included in each functional part and the like can be rearranged in a logically consistent manner. A plurality of functional parts and the like may be combined or divided into one. Each of the embodiments according to the present disclosure described above is not limited to faithful implementation of each of the described embodiments, but may be implemented by combining or omitting some of the features as appropriate That is, the contents of the present disclosure can be subjected to various variations and modifications based on the present disclosure by those skilled in the art. Therefore, these variations and modifications are included in the scope of this disclosure. For example, in each embodiment, each functional part, each means, each step and the like can be added to other embodiments in a logically consistent manner, or can be replaced with each functional part, each means, each step and the like of other embodiments. Further, in each embodiment, the plurality of each functional part, each means, each step and the like can be combined into one or divided. Each of the embodiments of the present disclosure described above is not limited to faithful implementation of each of the described embodiments, and may be implemented by combining or omitting some of the features as appropriate.

The embodiment described above is not limited to implementation only as an electronic device 1. For example, the embodiment described above may be implemented as a method for controlling devices such as the electronic device 1. Furthermore, for example, the embodiments described above may be implemented as a control program for devices such as the electronic device 1.

The electronic device 1 according to an embodiment may comprise at least one of the controller 10 or the transmission controller 30, for example, as a minimum configuration. Further, the transmission controller 30 may comprise at least one of the phase controller 32 and the power controller 34. On the other hand, in addition to the controller 10 and the transmission controller 30, the electronic device 1 according to an embodiment may be configured to include at least any one of the signal generator 22, the frequency synthesizer 24, the power amplifier 36, and the transmitting antenna 40, as shown in FIG. 3, as appropriate. Further, the electronic device 1 according to an embodiment may also be configured to include at least any one of the receiving antenna 50, the LNA 52, the mixer 54, the IF part 56, and the AD converter 58, the distance estimator 62 and the angle estimator 64 as appropriate, in place of or together with the functional parts described above. Thus, the electronic device 1 according to an embodiment may be configured in various ways. When the electronic device 1 according to an embodiment is mounted on a mobile body 100, for example, at least any one of the functional parts described above may be installed in a suitable location, such as inside the mobile body 100. On the other hand, in an embodiment, for example, at least any one of the transmitting antenna 40 and the receiving antenna 50 may be installed outside the mobile body 100.

Further, in the embodiment described above, when the mobile body 100 is an automobile, the stop space P has been described as a space in which the automobile parks or stops. However, in an embodiment, a stop space may be, for example, a space where a ship docks on the water, or a space in the air where a drone or the like, for example, docks.

Also, in the embodiments described above, beamforming was explained mainly from the side where the transmitted waves are transmitted. However, beamforming may also be done on the side that receives the reflected waves obtained by reflection of the transmitted waves to intensify the reception intensity of the transmitted waves to be transmitted from any direction and suppress the reception of the transmitted waves to be transmitted from any other direction.

### REFERENCE SIGNS LIST

1 Electronic device
5 Sensor
10 Controller
12 Storage
22 Signal generator
24 Frequency synthesizer
30 Transmission controller
32 Phase controller
34 Power controller
36 Power amplifier
40 Transmitting antenna
50 Receiving antenna
52 LNA
54 Mixer
56 IF part
58 AD converter
62 Distance estimator
64 Angle estimator
66 Relative speed estimator
70 Mobile body controller (ECU)
82 Steering wheel
84 Gear
90 Communicator
100 Mobile body
200 Object (Body)

## Claims

1. An electronic device, comprising:
a plurality of transmitting antennas installed in a mobile body; and
a transmission controller configured to control transmitted waves to be transmitted from the plurality of transmitting antennas to form a beam in a predetermined direction,
wherein the transmission controller controls the predetermined direction in which the beam is formed according to a steering direction of the mobile body.

2. The electronic device, according to claim 1, wherein the transmission controller controls the predetermined direction in which the beam is formed by changing at least one phase of transmitted waves to be transmitted from the plurality of transmitting antennas.

3. The electronic device, according to claim 1, wherein the transmission controller controls the predetermined direction in which the beam is formed according to a steering angle of a steering wheel of the mobile body.

4. The electronic device, according to claim 1, wherein the transmission controller controls change in the predetermined direction in which the beam is formed from a beam reference direction to increase as angular change in the steering wheel from a steering reference direction increases.

5. The electronic device, according to claim 1,
wherein the transmission controller controls so that when the steering direction is left, the predetermined direction in which the beam is formed is left, and when the steering direction is right, the predetermined direction in which the beam is formed is right.

6. The electronic device, according to claim 1, comprising a plurality of sensors with the plurality of transmitting antennas,
wherein the transmission controller selects a sensor in which the transmitted waves form a beam in a predetermined direction among the plurality of sensors according to at least one of a traveling direction of the mobile body and a steering direction of the mobile body.

7. The electronic device, according to claim 1, wherein the transmission controller controls transmitted waves to be transmitted from the plurality of transmitting antennas to form a beam in a predetermined direction during predetermined operation of the mobile body.

8. The electronic device, according to claim 1, comprising:
a receiving antenna configured to receive reflected waves obtained by reflection of the transmitted waves; and
a controller configured to detect objects around the mobile body based on transmitted signals transmitted as the transmitted waves and received signals received as the reflected waves.

9. The electronic device, according to claim 8, comprising a communicator configured to notify information obtained as results of detecting objects around the mobile body,
wherein the controller notifies the information obtained as the results of detecting the objects around the mobile body from the communicator.

10. The electronic device, according to claim 8, comprising a mobile body controller configured to control operation of the mobile body,
wherein the controller supplies the information obtained as the results of detecting the objects around the mobile body to the mobile body controller.

11. A method for controlling an electronic device, including:
a step of controlling transmitted waves to be transmitted from a plurality of transmitting antennas installed in a mobile body to form a beam in a predetermined direction; and
a step of controlling the predetermined direction according to a steering direction of the mobile body.

12. An electronic device control program, configured to cause a computer to perform:
a step of controlling transmitted waves to be transmitted from a plurality of transmitting antennas installed in a mobile body to form a beam in a predetermined direction; and
a step of controlling the predetermined direction according to a steering direction of the mobile body.

13. The electronic device, according to claim 1,
wherein the transmission controller controls direction of beamforming to 180-α degrees with respect to a mobile body side surface axis, with an angle of the steering wheel from a steering reference direction as α degrees.
